# FASCICULE DE BREVET EUROPEEN

(11) **EP 2 723 645 B1**
(45) Date de publication et mention de la délivrance du brevet: **12.08.2015**
(21) Numéro de dépôt: 12738513.6
(22) Date de dépôt: 22.06.2012
(51) Int. Cl.: B65D 5/00, B65D 5/48, B65D 71/38, B65D 5/32

(54) **EMBALLAGE D'OBJETS DISPOSES EN UNE OU PLUSIEURS COUCHES**
VERPACKEN VON IN EINER ODER MEHREREN SCHICHTEN POSITIONIERTEN GEGENSTÄNDEN
PACKAGING OF OBJECTS LOCATED IN ONE OR MORE LAYERS

(30) Priorité: 27.06.2011 FR 1155671
(43) Date de publication de la demande: 30.04.2014
(73) Titulaire: Tecma Pack, 77120 Coulommiers (FR)
(72) Inventeur: LAUDET, Gérard, 77120 COULOMMIERS (FR)
(74) Mandataire: Derambure Conseil
(86) Numéro de dépôt international: PCT/FR2012/051433
(87) Numéro de publication internationale: WO 2013/001215

(56) Documents cités:
- EP-A1- 1 657 164
- WO-A1-97/28051
- WO-A1-97/30908
- WO-A1-2008/095194
- BE-A- 693 149
- FR-A1- 2 888 821

## Description

L'invention est relative à l'emballage d'objets disposés en une ou plusieurs couches.

Plus précisément, l'invention a pour objet, en premier lieu, un flan à plat, spécialement apte, une fois en volume, à faire partie d'un emballage pour au moins une couche d'au moins deux objets. Elle a également pour objet, en deuxième lieu, un tel flan en volume. Elle a également pour objet, en troisième lieu, un tel emballage pour au moins une couche d'au moins deux objets comportant en combinaison un tel flan en volume et une coiffe. Elle a également pour objet, en quatrième lieu, un paquet comprenant un tel emballage et au moins une couche d'au moins deux objets. Elle a également pour objet, en cinquième lieu, une charge palettisée d'objets ou de groupe d'objets agencés en au moins une couche, comprenant de tels paquets. Elle a également pour objet, en sixième lieu, un procédé de réalisation d'un tel paquet. Elle a également pour objet, en septième lieu, un procédé de réalisation d'une telle charge palettisée. Elle a également pour objet, en huitième lieu, une installation pour la mise en oeuvre dudit procédé de réalisation d'un tel paquet.

Dans le contexte de l'invention, on désigne conventionnellement par « objet », dans une réalisation typique, un emballage primaire comprenant un ou plusieurs pots ou autre contenant, emplis de produit lacté ou de dessert, agencés en une ou plusieurs rangées longitudinales et/ou transversales. De façon typique, un tel pot est en matière plastique et comporte une paroi latérale de forme générale cylindrique ou prismatique ou tronconique ou tronc pyramidale, une paroi de fond et une paroi de sommet, en particulier un opercule ou un autre agencement analogue. De façon typique, plusieurs pots sont reliés ensemble, en particulier par une collerette de liaison ou un autre agencement analogue. Dans certaines réalisations, l'objet comprend en outre une jaquette en carton ou un autre agencement analogue entourant les pots. Il est entendu que le cas où l'objet comprend un ou plusieurs pots tels qu'ils ont été définis n'est pas limitatif, un autre contenant pouvant être prévu au lieu et place du pot en question. Dans le contexte de l'invention, l'on entend par « objet », un objet tel qu'il vient d'être décrit ou tout objet analogue.

Les pots en question sont le plus souvent présentés non pas à l'unité mais par groupe de plusieurs pots, plusieurs pots étant reliés ensemble par une collerette de liaison ou un autre agencement analogue comme indiqué, et/ou superposés en plusieurs couches. D'autre part, les groupes de pots sont destinés à être placés sur une palette, avec pour effet, des forces de compression verticales.

Selon une réalisation connue et d'usage courant, chaque groupe de pots comporte une jaquette et plusieurs groupes de pots sont disposés côte à côte sur un plateau de transport réalisé par mise en volume d'un flan à plat. Ce plateau de transport comprend, en premier lieu, un fond rectangulaire horizontal et inférieur et, en second lieu, quatre parois de chant saillant au-dessus du fond sur ses quatre côtés, dont les bords libres opposés au fond sont conformés de sorte à présenter quatre parties d'angle plus hautes, et dont les angles avec le fond sont conformés de sorte à présenter quatre découpes d'angle. Chaque groupe de pots est disposé sur la face supérieure du fond. Lorsqu'un plateau de transport est empli de groupes de pots, sa face supérieure, libre, est formée par celle, libre, des parois de sommet des pots, sauf s'il est prévu une coiffe formant couvercle. Lorsque deux plateaux de transport emplis de groupes de pots sont superposés, les quatre parties d'angle plus hautes du plateau inférieur coopèrent avec les quatre découpes d'angle du plateau supérieur. Pour assurer la résistance aux forces de compression verticales, le plateau de transport est rigidifié de différentes manières possibles : réalisation de parties conformées en relief, réalisation de plusieurs couches solidarisées mutuellement...

Une telle réalisation a plusieurs contraintes et restrictions. Si l'on souhaite que les pots aient une épaisseur limitée, l'on est conduit à devoir renforcer le plateau de transport avec les inconvénients inhérents. Si les plateaux de transport sont indispensables pour le transport, leur valeur ajoutée sur le lieu de vente ou pour le client acheteur qui est inexistante. S'il est prévu une coiffe formant couvercle, la quantité de matière utilisée est importante. Avec une telle réalisation, le magasin de vente doit se préoccuper d'éliminer les plateaux de transport au fur et à mesure que ceux-ci sont vidés des pots.

Selon la réalisation décrite par le document FR-A-2911851, un groupe de pots est dépourvu de jaquette et plusieurs groupes de pots sont disposés côte à côte sur un plateau de présentation réalisé par mise en volume d'un flan à plat. Ce plateau de présentation comprend, en premier lieu, un fond rectangulaire horizontal et inférieur. Le plateau de présentation comprend, en deuxième lieu, trois parois de chant saillant au-dessus du fond sur trois de ses côtés, dont les bords libres opposés au fond sont conformés de sorte à présenter deux parties d'angle plus hautes, et dont les angles avec le fond sont conformés de sorte à présenter deux découpes d'angle. Le plateau de présentation comprend, en troisième lieu, une ou plusieurs parois de séparation saillant au-dessus du fond et situées à l'écart de ses bords, réalisées chacune par repliement bord à bord et à 90° de deux région du flan à plat. La hauteur des parois de séparation est plus petite que la hauteur des parois de chant. Chaque groupe de pots est disposé à cheval sur le bord libre d'une paroi de séparation. Selon le document FR-A-2911851, la force de compression exercée sur les pots par suite de l'empilement sur une palette est diminuée et il est ainsi possible de réduire l'épaisseur de la paroi des pots entre environ 0,7 mm et 0,8 mm. Lorsqu'un plateau de présentation est empli de groupes de pots, sa face supérieure, libre, est formée par celle, libre, des parois de sommet des pots. Lorsque deux plateaux de présentation emplis de groupes de pots sont superposés, comme dans une palette, la face inférieure du fond du plateau supérieur repose sur la face libre des parois de sommet des pots et les deux parties d'angle plus hautes du plateau inférieur coopèrent avec les deux découpes d'angle du plateau supérieur. Le plateau constitue un plateau de présentation des pots sur le lieu de vente, le client acheteur saisissant un groupe de pots en l'extrayant du plateau et plus spécialement de la paroi de séparation sur laquelle il est disposé à cheval.

Une telle réalisation a plusieurs contraintes et restrictions. Cette réalisation exclut de placer les groupes de pots dans des jaquettes, celles-ci interdisant de disposer à cheval chaque groupe de pots sur le bord libre d'une paroi de séparation. Or, de telles jaquettes s'avèrent le plus souvent très utiles à des fins informatives par exemple. Ensuite, si elle permet de réduire la force de compression exercée sur les pots, cette réalisation ne la supprime pas, tant s'en faut, un plateau supérieur empli de pots reposant sur la face libre des parois de sommet des pots emplissant le plateau inférieur. Dès lors, l'épaisseur des pots ne peut être excessivement limitée, sauf à ce que les pots s'écrasent ou que le risque d'écrasement des pots soit très augmenté. Avec cette réalisation, il est indispensable que les pots aient une paroi de sommet plane, ce qui exclut des formes autres, de fantaisie. Avec cette réalisation, les groupes de pots sont limités à un petit nombre de pots, quatre comme représenté sur le document, ce qui exclut, par exemple, des pots groupés en plusieurs couches. Avec cette réalisation, le maintien relatif de deux plateaux superposés peut poser problème, le nombre de parties d'angle plus hautes supérieures et de découpes d'angle inférieures étant nécessairement limité à deux. Avec une telle réalisation, le magasin de vente doit se préoccuper d'éliminer les plateaux de présentation au fur et à mesure que ceux-ci sont vidés des pots.

Selon la réalisation décrite par les documents WO 96/17791, US 2004/0129594, WO 2006/091533, les pots d'un groupe de pots sont fixés par leurs parois de fond sur une barquette peu épaisse réalisée par mise en volume d'un flan à plat. Cette barquette comprend, en premier lieu, un fond rectangulaire horizontal et inférieur et, en second lieu, quatre parois de chant saillant sur une faible hauteur au-dessus du fond sur ses quatre côtés. Chaque groupe de pots est disposé sur la face supérieure du fond. Plusieurs barquettes ainsi emplies de pots sont disposées côte à côté. Une découpe est posée sur la face supérieure libre formée par les parois de sommet des pots des groupes placés sur le fond de ces barquettes. Un film en matière plastique, thermorétractable, enferme l'ensemble. Lorsque deux tels ensembles sont superposés, comme dans une palette, la face extérieure inférieure du film de l'ensemble supérieur repose sur la face extérieure supérieure du film de l'ensemble inférieur.

Une telle réalisation a plusieurs contraintes et restrictions. Les pots encaissent directement les forces de compression, ce qui exclut d'avoir des pots d'une épaisseur limitée. La barquette, la découpe et le film ont une valeur ajoutée sur le lieu de vente ou pour le client acheteur qui est inexistante. Le maintien relatif de plusieurs barquettes côte à côté est très limité. Les ensembles superposés peuvent se déplacer de façon relative l'un par rapport à l'autre. La quantité de matière utilisée est importante. Le magasin de vente doit se préoccuper d'ouvrir les ensembles et d'éliminer les barquettes, les découpes et le film au fur et à mesure de l'utilisation.

Le document US-A-2046485 décrit un emballage formé à partir d'un flan à plat comprenant une partie de fond avec une séparation intérieure pour former deux compartiments et une partie de couvercle reliée à la partie de fond par une ligne de pliage. Tant la partie de fond que la partie de couvercle a un panneau principal rectangulaire et horizontal, respectivement de fond et inférieur et de couvercle et supérieur, et quatre parois de chant saillant sur une faible distance de ce panneau.

Le document US-A-5265796 décrit un emballage pour produit alimentaire sous la forme d'un flan mis en volume à partir d'un flan à plat et comprenant deux panneaux de réception d'objets disposés côte à côte sur une première face, quatre panneaux externes de rive sur les quatre côtés, et deux panneaux internes d'entretoise, placés l'un contre l'autre par leurs secondes faces et disposés médianement perpendiculairement aux deux panneaux de réception et parallèlement à une paire de panneaux de rive. Une coiffe est disposée tête-bêche et solidarisée au flan en volume, par-dessus.

Ces deux dernières réalisations procèdent d'une conception de type barquette à couvercle avec quatre panneaux de rive. Ces réalisations sont inadaptées au cas de pots tel que cela est envisagé par l'invention. Les emballages ont une valeur ajoutée sur le lieu de vente ou pour le client acheteur qui est inexistante. Les emballages superposés peuvent se déplacer de façon relative l'un par rapport à l'autre. La quantité de matière utilisée est importante. Le magasin de vente doit se préoccuper d'ouvrir les ensembles et d'éliminer les emballages.

Le document WO 97/30908 se rapporte à un élément de groupage destiné à grouper au moins deux emballages contenant chacun au moins une plaque de pots reliés par une collerette ou de pots individuels, lesdits emballages étant disposés côte à côte en une seule rangée de manière que leurs faces ouvertes respectives soient tournées du même côté, caractérisé en ce qu'il comprend une paroi de fond en carton sur laquelle les emballages reposent et deux volets latéraux en carton munis chacun à ses extrémités d'au moins deux tenons susceptibles d'être pliés à 90° par rapport aux volets latéraux et d'être emboîtés respectivement dans les deux passages qui sont définis entre les pots se trouvant dans les deux emballages les plus éloignés de ladite rangée d'emballages, de manière à se coincer sous les collerettes desdits pots ou sous la paroi desdits emballages.

Le document EP 1 657 164 vise un paquet ayant une partie de corps et des parties latérales fixées à la partie de corps. La partie de corps est fabriquée à partir d'un flan ayant des lignes de pliage et les parties latérales limitent trois sections.

Le document WO 97/28051 vise une boîte en carton à plusieurs niveaux pour des groupes d'articles, formée à partir d'ébauches supérieure et inférieure de matériau en feuille pliable dans lequel le flan comprend des pattes pliables pour améliorer l'empilage. Le carton comprend également des pattes de positionnement vertical complémentaires d'ouvertures de positionnement.

Le document BE 693149 décrit un emballage consistant en une feuille de carton pliable et d'une feuille d'enveloppe de papier, plastique ou autre, le tout étant disposé en deux rangées parallèles.

Le document FR 2888 821 décrit un emballage en en un matériau semi-rigide, tel que le carton ou le carton ondulé, comprenant un corps contenant un lot d'objets, notamment d'objets à axe de symétrie, destinés à être transportés et exposés en vente dans ce corps, le corps d'emballage comprenant un fond rectangulaire, sur lequel reposent les objets, et au moins deux parois latérales, articulées par un refoulage suivant deux côtés parallèles du fond et dressées perpendiculairement à ce fond, l'un au moins des deux autres côtés du fond étant dépourvu de paroi cet emballage étant caractérisé en ce que, suivant le ou les côtés dépourvus de paroi latérale, au moins un lien souple dont les deux extrémités sont respectivement fixées sur les deux parois parallèles contiguës de l'emballage et qui est sensiblement parallèle au fond de l'emballage, enserre les objets conditionnés en exerçant sur eux une traction vers l'intérieur de l'emballage, de manière à maintenir ces objets en position au cours du transport, ce lien pouvant être rompu lors de l'exposition en vente de ces objets, afin que les acheteurs potentiels puissent avoir un accès aisé à ces objets.

Le problème à la base de l'invention est donc de réaliser un système d'emballage pour une et possiblement plusieurs couches d'objets, selon la définition précédemment à ce terme, qui, à la fois, permette d'avoir des pots de plus faible épaisseur, donc a priori moins - ou peu - résistants à la compression, avec les avantages inhérents en termes de coût, directs ou indirects, et d'avoir une moindre consommation de matière d'emballage autre, telle que le carton, avec néanmoins, en même temps, une excellente résistance à la compression. Un autre problème est d'éliminer les emballages superflus. Un autre problème est de permettre que chaque groupe de pots soit enveloppé d'une jaquette du moins si cela est souhaité. Un autre problème est de faciliter la mise en présentation des pots. Un autre problème est de minimiser la gestion des emballages sur les points de vente. Un autre problème est de faire en sorte que l'emballage soit aussi polyvalent que possible : pour le groupage, le transport, la présentation à le vente et l'utilisation par le client acheteur. Un autre problème est de faire en sorte que les différentes couches d'emballages empilées, tel que sur une palette, ne puissent se déplacer les unes par rapport aux autres. Un autre problème est de préserver et même d'améliorer la ventilation des pots. Un autre problème est d'apporter du confort et de la visibilité. Un autre problème est de pouvoir un tel système d'emballage d'une ou plusieurs poignées de manutention, absentes des emballages précédemment décrits. Un autre problème est que la réalisation d'un tel emballage puisse être faite de façon rapide, simple, sûre et économique.

A cet effet, selon un premier aspect, l'invention a pour objet un flan à plat, spécialement apte, une fois en volume et combiné et solidarisé à une coiffe, à former un emballage pour au moins une couche d'au moins deux objets, le flan à plat étant du type en carton ou analogue avec une pluralité de panneaux ayant de la tenue, une pluralité de lignes de pliage parallèles à une direction longitudinale reliant des panneaux adjacents, une première face et une seconde face, incluant :
- au moins une paire de deux panneaux de réception d'objets, limités chacun transversalement par deux lignes de pliage de fond, aptes à être disposés dans le flan en volume de façon au moins sensiblement coplanaire et côte à côte transversalement, de sorte que les objets puissent reposer sur leurs premières faces,
- deux panneaux externes de rive, analogues, disposés latéralement, limité chacun transversalement par une ligne de pliage de fond et un bord de sommet et d'appui, relié chacun à un panneau de réception par une ligne de pliage de fond, aptes à être disposés, dans le flan en volume, de façon au moins sensiblement parallèles entre eux et orthogonale aux panneaux de réception,
- au moins une paire de deux panneaux internes d'entretoise, analogues, disposés médianement, limité chacun transversalement par une ligne de pliage de fond et une ligne de pliage de sommet et d'appui, reliés entre eux par ladite ligne de pliage de sommet et d'appui et reliés à deux panneaux de réception par deux lignes de pliage de fond, aptes à être disposés dans le flan en volume l'un contre l'autre par leurs secondes faces et de façon au moins sensiblement parallèles aux panneaux de rive,
les panneaux de rive et les panneaux d'entretoise ayant la même orientation par rapport aux panneaux de réception et entre leur ligne de pliage de fond et soit leur bord de sommet et d'appui soit leur ligne de pliage de sommet et d'appui, une largeur transversale analogue.

Un tel flan est tel que :
- l'un au moins des panneaux de rive et l'un au moins des panneaux d'entretoise comporte, sur son bord de sommet et d'appui, sa ligne de pliage de sommet et d'appui, au moins une partie saillante s'étendant sensiblement dans le plan dudit panneau de rive, et dudit panneau d'entretoise, dans la direction sensiblement orthogonale et dans le sens opposé à la ligne de pliage de fond dudit panneau de rive, et dudit panneau d'entretoise,
- l'un au moins des panneaux de réception comporte, attenant à sa ligne de pliage de fond avec un panneau de rive, et avec un panneau d'entretoise, au moins une partie traversante pour une introduction sensiblement dans le plan dudit panneau de rive, et dudit panneau d'entretoise et dans la direction sensiblement orthogonale audit panneau de réception,
- la partie saillante et la partie traversante, respectivement, sont de tailles et sont positionnées de façon relative sur le bord de sommet et d'appui, la ligne de pliage de sommet et d'appui et la ligne de fond, de sorte à être aptes, ledit flan étant en volume, à coopérer, respectivement, avec une partie traversante d'un autre flan analogue en volume disposé à l'aplomb et au-dessus et avec une partie saillante d'un autre flan analogue en volume disposé à l'aplomb au-dessous.

Selon une réalisation, l'enveloppe frontale d'une partie saillante est inférieure au contour frontal d'une partie traversante, de sorte à assurer leur coopération, en particulier la dite enveloppe et ledit contour sont ajustées pour assurer leur coopération sans jeu substantiel.

Selon une réalisation, une partie traversante s'étend en partie sur un panneau de réception et en partie sur le panneau de rive ou sur le panneau d'entretoise adjacent audit panneau de réception, à cheval sur la ligne de pliage de fond entre le panneau de réception et ledit panneau de rive ou ledit panneau d'entretoise.

Selon une réalisation, une partie traversante, une partie saillante, a en élévation une forme générale polygonale ou s'inscrivant dans une enveloppe de forme générale polygonale, en particulier une forme générale rectangulaire ou carrée ; en particulier une partie traversante et une partie saillante ont en élévation une forme analogue.

Selon une réalisation, les deux panneaux de rive et/ou les deux panneaux d'entretoise comportent au moins une partie saillante et au moins une partie traversante.

Selon une réalisation, une partie saillante ou une partie traversante est en plusieurs sections analogues, coplanaires, espacées le long de la direction longitudinale, en particulier est en deux sections ; et en particulier que la ou les parties saillantes et la ou les parties traversantes du flan sont toutes en un même nombre de sections. En particulier, les sections d'une partie saillante, ou d'une partie traversante, sont espacées et sensiblement également réparties le long du bord de sommet et d'appui, de la ligne de pliage de sommet et d'appui, ou de la ligne de pliage de fond, où elles se trouvent.

Selon une réalisation, une partie saillante s'étend à partir du bord de sommet et d'appui ou de la ligne de pliage de sommet et d'appui où elle se trouve et dans la direction sensiblement orthogonale et dans le sens opposé à la ligne de pliage de fond du panneau de rive ou du panneau d'entretoise qui la comporte, sur une longueur qui est une petite fraction de la largeur transversale des panneaux de rive et des panneaux d'entretoise, en particulier une fraction comprise entre de l'ordre de 5% à 30%, plus spécialement comprise entre de l'ordre de 10% à 20%.

Selon une réalisation, une partie saillante et/ou une partie traversante, en une ou en plusieurs sections, s'étend au total le long du bord de sommet et d'appui, de la ligne de pliage de sommet et d'appui, de la ligne de pliage de fond où elle se trouve, sur une longueur qui est une fraction de la longueur dudit bord de sommet et d'appui, de ladite ligne de pliage de sommet et d'appui, de ladite ligne de pliage de fond, en particulier une fraction comprise entre de l'ordre de 15% à 35%, plus spécialement comprise entre de l'ordre de 18% à 28%.

Selon une réalisation, la partie saillante du premier panneau d'entretoise d'une paire de panneaux d'entretoise est limitée et formée par une échancrure du second panneau d'entretoise de la paire de panneaux d'entretoise, la ligne de pliage de sommet et d'appui entre le premier panneau d'entretoise et le second panneau d'entretoise étant interrompue dans ladite partie saillante.

Selon une réalisation, sur leurs deux bords disposés sensiblement parallèlement à la direction transversale, les panneaux de réception sont dépourvus de panneaux de rive.

Selon une réalisation, au moins un, et en particulier tous les panneaux de réception, comportent un ou plusieurs segments découpés limitant un ou plusieurs volets, aptes, le flan étant en volume, à être érigés par rapport aux panneaux de réception dans la même direction que les panneaux de rive et les panneaux d'entretoise, en vue de caler les objets.

Selon une réalisation, au moins un, et en particulier les deux panneaux de rive, comportent au moins une ouverture apte, le flan étant en volume, à l'aération et/ou à la préhension.

Selon une réalisation, au moins un, et en particulier les deux panneaux d'entretoise d'au moins une paire de panneaux d'entretoise, comportent au moins une ouverture apte le flan étant en volume, à l'aération.

Selon un deuxième aspect, l'invention a pour objet un flan en volume, spécialement apte à faire partie d'un emballage, étant combiné et solidarisé à une coiffe, réalisé par la mise en volume d'un flan à plat tel qu'il vient d'être décrit, dans lequel :
- les deux panneaux de réception de la au moins une paire de panneaux de réception sont disposés de façon au moins sensiblement coplanaire et côte à côte transversalement, en particulier sont disposés au moins sensiblement horizontalement, de sorte que les objets puissent reposer sur leurs premières faces,
- les deux panneaux de rive sont disposés de façon au moins sensiblement orthogonale aux panneaux de réception, en particulier sont disposés au moins sensiblement verticalement,
- les deux panneaux d'entretoise de la au moins une paire de panneaux d'entretoise sont disposés l'un contre l'autre par leurs secondes faces et de façon au moins sensiblement orthogonale aux panneaux de réception et dans le même sens que les deux panneaux de rive, en particulier sont disposés au moins sensiblement verticalement,

- la partie saillante s'étend sensiblement dans le plan du panneau de rive, et du panneau d'entretoise, le comportant, dans la direction sensiblement orthogonale et dans le sens opposé à la ligne de pliage de fond dudit panneau de rive, et dudit panneau d'entretoise, en particulier est située en partie supérieure du flan en volume et est dirigée vers le haut, la partie traversante étant située en partie inférieure du flan en volume.

Selon un troisième aspect, l'invention a pour objet un emballage pour au moins une couche d'au moins deux objets comportant en combinaison un flan en volume tel qu'il vient d'être décrit et une coiffe, solidarisés rigidement l'un à l'autre tête-bêche, et dans lequel :
- Les panneaux de réception forment une surface d'appui intérieure et inférieure de réception d'objets, les panneaux de rive forment une rive latérale des objets vers l'extérieur, et les panneaux d'entretoise forment une rive latérale des objets vers l'intérieur,
- la coiffe comprend une partie de couverture supérieure, située à l'aplomb et au-dessus de la au moins une paire de panneaux de réception et ladite partie de couverture coopère avec, en particulier est en appui sur, les bords de sommet et d'appui et la ou les lignes de pliage de sommet et d'appui des panneaux de rive et des panneaux d'entretoise,
- les panneaux de réception et la coiffe limitent entre eux un espace d'emballage d'objets, et ledit espace d'emballage d'objets comporte au moins deux compartiments côte à côte transversalement, séparés l'un de l'autre par au moins une paire de panneaux d'entretoise disposés l'un contre l'autre, les au moins deux compartiments étant aptes à recevoir les au moins deux objets,
- la coiffe comprend une partie de solidarisation solidarisée au flan en volume, en particulier solidarisée aux panneaux de rive,
- la coiffe ménage un ou des passages de coiffe pour le passage de la ou des parties saillantes du flan en volume, laquelle ou lesquelles parties saillantes du flan en volume saillent au-dessus de la partie de couverture de la coiffe.

Selon une première variante d'exécution de l'emballage, la coiffe est formée par un flan en volume, du type en carton ou analogue, avec un panneau de couverture et deux rabats de solidarisation latéraux analogues, situés de part et d'autre du panneau de couverture et reliés à celui-ci par deux lignes de pliage de coiffe, les deux rabats venant contre et étant solidarisés aux deux panneaux de rive du flan en volume, le panneau de couverture comportant au moins un passage de coiffe en forme de partie traversante de coiffe localisée attenante à la ligne de pliage de coiffe du panneau de couverture avec au moins un rabat et/ou localisée au droit d'une paire de panneaux d'entretoise du flan en volume, la partie traversante de coiffe et une partie saillante du flan en volume étant respectivement de tailles et positionnées de façon relative de sorte qu'une partie saillante du flan en volume traverse une partie traversante de coiffe et saille de la face extérieure du panneau de couverture de la coiffe.

Selon une réalisation, le panneau de couverture de la coiffe comporte au moins une partie traversante de coiffe attenante à ladite ligne de pliage de coiffe, en particulier aux deux lignes de pliage de coiffe, et au moins une partie traversante de coiffe au droit d'une paire de panneaux d'entretoise, en particulier de chaque paire de panneaux d'entretoise.

Selon une réalisation, l'enveloppe frontale d'une partie saillante du flan en volume est inférieure au contour frontal d'une partie traversante de coiffe, de sorte à assurer leur coopération, en particulier la dite enveloppe et ledit contour sont ajustées pour assurer leur coopération sans jeu substantiel.

Selon une réalisation, la coiffe comporte des parties traversantes de coiffe en nombre égal et avec une disposition analogue aux parties saillantes du flan en volume.

Selon une réalisation, une partie traversante de coiffe s'étend en partie sur le panneau de couverture de la coiffe et en partie sur un panneau de rabat de la coiffe, à cheval sur leur ligne de pliage de coiffe correspondante.

Selon une réalisation, une partie traversante de coiffe est en plusieurs sections analogues espacées, coopérant avec une partie saillante du flan en volume en plusieurs sections.

Selon une réalisation, le panneau de couverture de la coiffe comporte un ou plusieurs segments découpés limitant une ou plusieurs parties aptes à être érigées au-dessus du panneau de couverture, en vue de former un moyen de préhension.

Selon une réalisation, au moins un, et en particulier les deux panneaux de rabats de coiffe, comportent au moins une ouverture apte à coïncider avec une ouverture d'aération et/ou une ouverture de préhension du flan en volume.

Selon une réalisation, le flan en volume et la coiffe sont solidarisés par collage, soudage, agrafage ou analogue.

Selon une réalisation, la coiffe ne saille pas du flan en volume d'un côté ou de l'autre dans la direction longitudinale.

Selon une seconde variante d'exécution de l'emballage, la coiffe est formée par un tronçon de bande ou de lien tendu comprenant au moins une partie de couverture et deux rabats, ou par un tronçon de gaine ou de lien fermé sur lui-même comprenant au moins une partie de couverture, une partie inférieure et deux rabats, le tronçon de bande ou de lien ou de gaine ou de lien fermé sur lui-même étant solidarisé au flan en volume par collage, soudage, agrafage, serrage ou analogue.

Selon un quatrième aspect, l'invention a pour objet un paquet comprenant un emballage tel qu'il vient d'être décrit et au moins une couche d'au moins deux objets, la couche inférieure d'objets reposant par sa face inférieure sur une surface d'appui intérieure et inférieure formée par la face intérieure et supérieure des panneaux de réception, les panneaux de rive formant une rive latérale des objets vers l'extérieur, et les panneaux d'entretoise formant une rive latérale des objets vers l'intérieur, les au moins deux objets se trouvant dans les au moins deux compartiments côte à côte transversalement de l'espace d'emballage d'objets, séparés par une paire de panneaux d'entretoise disposés l'un contre l'autre entre des objets, l'encombrement de la au moins une couche d'objets dans la direction orthogonale aux panneaux de réception et à la partie de couverture de la coiffe, entre la face la plus inférieure et la face la plus supérieure, étant analogue ou au plus égal à l'écartement entre la face intérieure et supérieure des panneaux de réception et la face intérieure et inférieure de la partie de couverture, de sorte que la face intérieure et inférieure de la partie de couverture vienne contre ou soit au voisinage de la face supérieure de la couche supérieure d'objets, la ou des parties saillantes du flan en volume saillant au-dessus de la partie de couverture de la coiffe.

Selon une réalisation, le paquet comporte soit une soit plusieurs couches d'objets, ces couches étant alors superposées, en particulier directement superposées.

Selon une réalisation, un objet est un emballage primaire empli d'un contenu, comprenant un ou plusieurs pots agencées en plusieurs rangées longitudinales et/ou transversales, un pot ayant une paroi latérale de forme générale cylindrique ou prismatique, une paroi de fond et une paroi de sommet, en particulier un opercule, plusieurs pots étant reliés ensemble, en particulier vers leurs parois de sommet. En outre, selon une réalisation particulière, un objet comporte une collerette périphérique, en particulier une collerette de liaison de plusieurs pots, le chant de la collerette venant contre le panneau de rive et/ou le panneau d'entretoise. Et, selon une autre réalisation particulière, un objet est un emballage primaire comprenant un ou plusieurs pots agencés en plusieurs rangées longitudinales et/ou transversales avec une jaquette en carton ou analogue entourant les pots.

Selon une réalisation et une caractéristique, un objet est un emballage primaire comprenant un ou plusieurs pots d'épaisseur inférieure à l'épaisseur courante actuelle de tels pots et en particulier d'épaisseur inférieure à environ 0,7 mm, 0,8 mm.

Selon un cinquième aspect, l'invention a pour objet une charge palettisée d'objets comprenant une palette sur laquelle reposent une pluralité de paquets tels qu'ils viennent d'être décrits disposés les uns à côté des autres et les uns sur les autres à l'aplomb, la face extérieure et inférieure des panneaux de réception d'un paquet supérieur reposant sur la face extérieure et supérieure d'une partie de couverture d'un paquet inférieur, les parties saillantes dirigées vers le haut d'un paquet inférieur coopérant avec les parties traversantes d'un paquet supérieur, sans la nécessité de moyens d'emballage supplémentaire de chaque paquet ou de plusieurs paquets disposés côte à côte.

Selon un sixième aspect, l'invention a pour objet un procédé de réalisation d'un paquet tel qu'il a été précédemment décrit. Selon ce procédé :
- on a à disposition au moins deux objets,
- on a à disposition un flan à plat tel qu'il a été précédemment décrit,
- on a à disposition une coiffe,
- on met en forme le flan,
- on dispose les objets de sorte à former au moins une couche d'au moins deux objets, la couche inférieure d'objets reposant sur la face intérieure et supérieure des panneaux de réception, et toute autre couche d'objets étant superposée à la couche inférieure,
- on dispose la coiffe sur le flan en volume tête-bêche, la partie de couverture étant placée à l'aplomb et au-dessus des panneaux de réception, la face intérieure et inférieure de la partie de couverture venant contre ou au voisinage de la face supérieure de la couche supérieure d'objets, la partie de couverture coopérant avec les bords de sommet et d'appui et la ou les lignes de pliage de sommet et d'appui des panneaux de rive et des panneaux d'entretoise, la ou des parties saillantes du flan en volume saillant au-dessus de la partie de couverture de la coiffe,
- et on solidarise la coiffe au flan en volume.

Selon un septième aspect, l'invention a pour objet un procédé de réalisation d'une telle charge palettisée, dans lequel :
- on a à disposition une palette,
- on a à disposition des paquets tels qu'ils ont été précédemment décrits,
- et on dispose les paquets sur la palette, les uns à côté des autres et les uns sur les autres à l'aplomb, sans la nécessité de moyens d'emballage supplémentaire de chaque paquet ou de plusieurs paquets disposés côte à côte.

Enfin, selon un huitième aspect, l'invention a pour objet une installation pour la mise en oeuvre du procédé de réalisation d'un paquet qui vient d'être décrit. Une telle installation comprend :
- des moyens d'alimentation en au moins deux objets, en flans à plat, en coiffe,
- des moyens de mise en forme des flans,
- des moyens pour disposer les objets sur les flans,
- des moyens pour disposer une coiffe sur le flan en volume tête-bêche,
- des moyens pour solidariser la coiffe au flan en volume.

On décrit maintenant plusieurs modes de réalisation de l'invention à l'aide des dessins, dans lesquels :
- la figure 1 est une vue en élévation d'un flan à plat entrant dans la réalisation d'un emballage selon l'invention, dans une réalisation possible, non limitative, pour une couche unique comportant deux objets, chacun consistant en quatre pots sur deux rangées longitudinales et deux rangées transversales, soit en tout huit pots,
- la figure 2 est une vue en élévation d'une coiffe à plat entrant dans la réalisation de l'emballage comprenant un flan tel que le flan de la figure 1 mis en volume,
- la figure 3 est une vue analogue à la figure 1 d'un flan à plat pour un emballage avec deux couches comportant chacune deux objets, chacun consistant en quatre pots sur deux rangées longitudinales et deux rangées transversales, soit en tout seize pots,
- la figure 4 est une vue en perspective et la figure 5 est une vue en élévation d'un paquet selon l'invention dans une réalisation possible, non limitative, comportant deux couches,
- la figure 6 est une vue en perspective d'une charge palettisée comportant une palette sur laquelle reposent une pluralité de paquets selon l'invention disposés les uns à côté des autres et les uns sur les autres en plusieurs couches,
- la figure 7 est une vue schématique en perspective de huit variantes de paquets selon l'invention, selon huit configurations différentes, non limitatives,
- la figure 8 est un schéma en perspective illustrant une réalisation du procédé selon l'invention,
- la figure 9 est un schéma en perspective illustrant de façon simplifiée une réalisation d'une installation selon l'invention pour la mise en oeuvre du procédé illustré par la figure 8.

Un objet 1 dans le contexte de l'invention est un emballage primaire empli de son contenu qui comprend un ou plusieurs pots 1a, ou analogue, agencées en une ou plusieurs rangées longitudinales et/ou transversales. Un tel pot 1a est du type ayant une paroi latérale 2a de forme générale cylindrique ou prismatique, une paroi de fond 2b et une paroi de sommet 2c telle qu'un opercule. Bien entendu, une telle réalisation n'est donnée qu'à titre exemplatif, la forme d'un pot 1a pouvant faire l'objet d'autres réalisations. Plusieurs pots 1a constituant un objet 1 sont reliés ensemble de sorte à former une unité, typiquement vers leurs parois de sommet 2c, coplanaires, au moyen d'une collerette de liaison 2d ayant un chant annulaire périphérique 2e. Bien que selon l'invention l'on puisse s'en dispenser, un objet 1 peut également comprendre une jaquette en carton ou analogue entourant les pots 1a ou analogue. Par exemple, un objet 1 peut comporter quatre pots 1a en deux rangées longitudinales et deux rangées transversales, ou six pots 1a en deux rangées longitudinales et trois rangées transversales, ou huit pots 1a en deux rangées longitudinales et quatre rangées transversales, ou douze pots 1a en deux rangées longitudinales et six rangées transversales. Ces réalisations sont indicatives et non limitatives.

Un tel pot 1a ou analogue est typiquement destiné à un usage individuel et à un contenu tel qu'un produit lacté ou de dessert, ces destinations n'étant toutefois pas limitatives.

Un tel pot 1a ou analogue présente un axe qui, typiquement et normalement est disposé verticalement ou sensiblement verticalement ou éventuellement faiblement incliné sur la verticale. C'est en relation avec cette position relative du pot 1a ou analogue qu'est faite, conventionnellement, la description et que doivent être compris les termes « inférieur », « supérieur », « haut », « bas », « fond », « sommet », « au-dessus » et « au-dessous » utilisés pour la description du paquet 3, de l'emballage 4 et de leurs parties constitutives. Cette position du pot 1a ou analogue n'est toutefois pas limitative, un pot 1a ou analogue pouvant se trouver dans d'autres positions, comme le paquet 3 dont il fait partie et l'emballage 4 qu'il comporte, et leurs parties constitutives. En conséquence, les termes « inférieur », « supérieur », « haut », « bas », « fond », « sommet », « au-dessus » et « au-dessous » ne sont pas non plus limitatifs s'agissant du paquet 3, de l'emballage 4 et de leurs parties constitutives.

Par « longitudinal » et par « transversal », l'on entend, conventionnellement, deux directions orthogonales horizontales, respectivement L et T.

Il est entendu que dans le contexte de l'invention, celle-ci n'est pas limitée au cas d'un objet 1 qui comprend un ou plusieurs pots 1a tels qu'ils viennent d'être décrits, bien au contraire. De façon plus générale, un objet 1 comprend un ou plusieurs emballages primaires emplis d'un contenu, qui peuvent être aussi bien des pots 1a tels qu'ils viennent d'être décrits que d'autres types d'emballages primaires au lieu et place des pots en question, ces emballages primaires répondant à la même problématique que les pots 1a. Par conséquent, le terme « pot » n'est en aucun cas limitatif et si la description est faite en référence à cet exemple particulier, l'invention s'applique également à d'autres emballages primaires que des pots 1a. En d'autres termes, par « pot », l'on entend emballage primaire.

L'invention vise l'emballage d'au moins une couche 5 d'au moins deux objets 1, à savoir, typiquement, une couche unique ou deux, trois, voire un plus grand nombre de couches, le nombre de couches 5 étant typiquement inférieur, par exemple, à de l'ordre de quatre. Le nombre de couches d'objets 5 n'est pas limitatif, même si ce nombre est limité.

Par « couche d'au moins deux objets », l'on entend deux ou un plus grand nombre d'objets 1 analogues placés côte à côte, avec leurs parois latérales 2a à proximité les unes des autres, leurs parois de fond 2b, coplanaires, définissant la face inférieure 6b de la couche d'objets 5 et leurs parois de sommet 2c, coplanaires, définissant la face supérieure 6c de la couche d'objets 5.

Lorsqu'il est prévu plusieurs couches d'objets 5, celles-ci sont superposées d'aplomb. Ainsi, la couche supérieure d'objets 5 repose par sa face inférieure 6b sur la face supérieure 6c de la couche inférieure d'objets 5. Selon une réalisation de l'invention, la couche supérieure d'objets 5 repose directement sur la couche inférieure d'objets 5, sans la nécessité d'un intercalaire. Qui peut le plus pouvant le moins, un tel intercalaire, bien que non indispensable, peut être prévu.

Par « paquet » 3, l'on entend la ou les couches d'objets 5 et leur emballage 4.

Cet emballage 4, comporte, en combinaison, un flan 7 en volume et une coiffe 8, solidarisés rigidement l'un à l'autre tête-bêche.

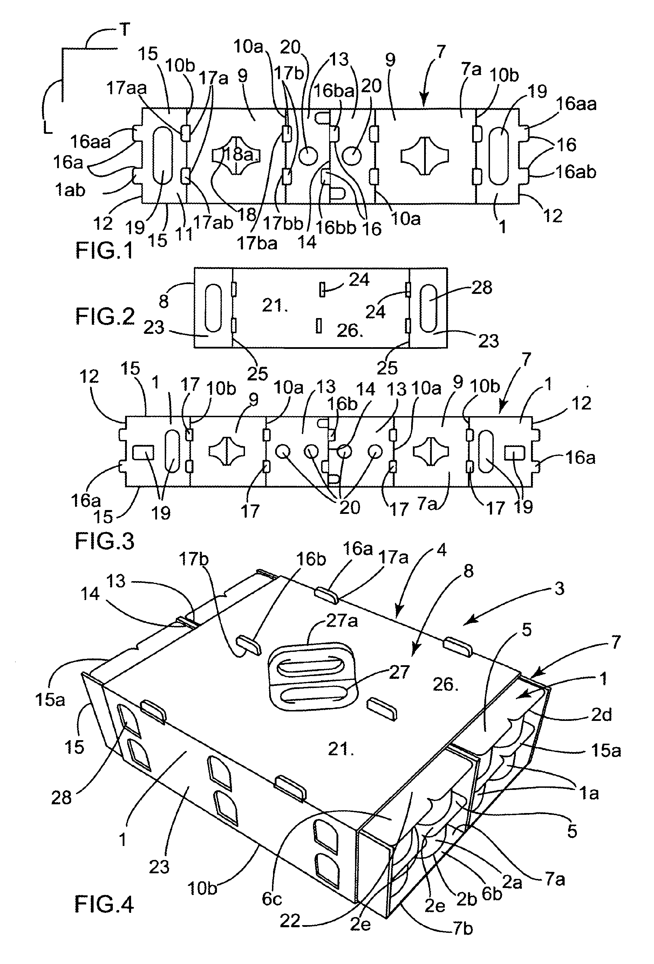

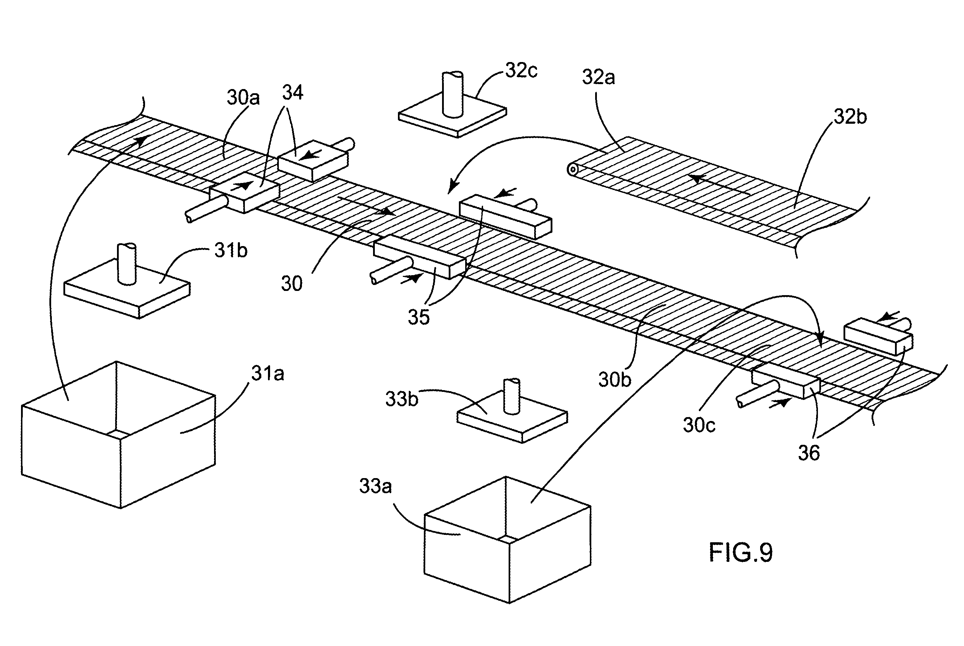

En référence tout particulièrement aux figures 1, 3, 4 et 5, l'on décrit maintenant plus spécialement le flan 7, lequel peut se trouver soit à l'état à plat, initialement, soit à l'état en volume, finalement, en vue d'être, et une fois, incorporé dans l'emballage 4. Par « initialement » et « finalement », l'on se réfère à la séquence de réalisation de l'emballage, comme il résulte de la figure 9.

Le flan 7 est du type en carton ou analogue avec une pluralité de panneaux ayant de la tenue et une pluralité de lignes de pliage parallèles, et en particulier ici toutes parallèles, à la direction longitudinale L, reliant des panneaux adjacents. L'on définit sur le flan 7, une première face 7a et une seconde face 7b.

Le flan 7 comporte en premier lieu, et de façon générale, au moins une paire de deux panneaux de réception d'objets 9, limités chacun transversalement par deux lignes de pliage de fond, une ligne de pliage de fond, inférieure, médiane 10a et une ligne de pliage de fond, inférieure, latérale 10b.

Dans le flan 7 en volume, les deux panneaux de réception 9 sont disposés de façon au moins sensiblement coplanaire et côte à côte transversalement. Les deux panneaux de réception 9 sont tels que les objets 1 puissent reposer sur la première face qui, dans le paquet 3 est la face intérieure et supérieure formant une surface d'appui intérieure et inférieure.

Par « intérieur », l'on vise à qualifier ce qui est, ou peut être considéré comme étant, en-dedans du paquet 3 ou de l'emballage 4. Par « extérieur », inversement, l'on vise à qualifier ce qui est, ou peut être considéré comme étant, en-dehors du paquet 3 ou de l'emballage 4.

Dans les réalisations représentées, le flan 7 comporte une seule paire de deux panneaux de réception 9, ces réalisations n'étant toutefois pas limitatives.

Le flan 7 comporte en deuxième lieu deux panneaux externes de rive 11.

Par « externe », l'on entend l'on vise à qualifier ce qui est, ou peut être considéré comme étant, vers le dehors du flan à plat 7. Par « interne », inversement l'on vise à qualifier ce qui est, ou peut être considéré comme étant, vers le dedans du flan à plat 7. Par « médian » l'on vise à qualifier ce qui est, ou peut être considéré comme étant, en position centrale interne.

Les deux panneaux de rive 11 sont analogues et disposés latéralement. Chaque panneau de rive 11 est limité transversalement par la ligne de pliage de fond, inférieure, 10b et un bord de sommet (supérieur) et d'appui 12. Chaque panneau de rive 11 est relié à un panneau de réception 9 par la ligne de pliage de fond 10b. Dans le flan 7 en volume, les deux panneaux de rive 11 sont disposés de façon au moins sensiblement parallèles entre eux et de façon orthogonale aux panneaux de réception 9. Dans la réalisation représentée, le bord de sommet et d'appui 12 est un bord libre.

Dans la réalisation représentée, le flan 7 ne comporte que les deux panneaux de rive 11 précédemment mentionnés sur deux côtés parallèles du flan 7, et non deux paires de panneaux de rive sur quatre côtés du flan 7, deux à deux parallèles et deux à deux perpendiculaires. En effet, sur leurs deux bords disposés sensiblement parallèlement à la direction transversale, les panneaux de réception 9 sont dépourvus de panneaux de rive. Ainsi, le flan 7 selon cette réalisation diffère des flans destinés à former une barquette, lesquels flans pour barquette comportent un fond et deux paires de panneaux de rive. Et le flan 7 en volume diffère d'une telle barquette. Selon l'invention, en effet, il n'est pas requis d'avoir deux paires de panneaux de rive sur les quatre côtés du flan à des fins de rigidité, celle-ci résultant de la structure même de l'emballage 4. Le fait que le flan 7 ne comporte que les deux panneaux de rive 11 présente comme premier avantage de ne pas être obligé de prévoir de solidariser deux panneaux de rive adjacents, perpendiculaires l'un à l'autre, au moyen de pattes et de colle, ou analogue, comme pour une barquette comportant deux paires de panneaux de rive. Cet avantage est source de simplicité. Un second avantage est que le flan 7 en volume et plus généralement l'emballage 4 présentent une configuration générale de jaquette, bien perçue par le client acheteur, notamment permettant de visualiser les pots 1a ou analogue et permettant d'assurer leur aération par deux ouvertures 15a de part et d'autre, limitées par les bords 15. Qui peut le plus pouvant le moins, une telle seconde paire de panneaux de rive, bien que non indispensable, peut être prévue.

Le flan 7 comporte en troisième lieu au moins une paire de deux panneaux internes d'entretoise 13.

Les deux panneaux d'entretoise 13 sont analogues et disposés médianement. Chaque panneau d'entretoise 13 est limité transversalement par la ligne de pliage de fond 10a et une ligne de pliage de sommet (supérieur) et d'appui 14. Les deux panneaux, d'entretoise 13 sont reliés entre eux par ladite ligne de pliage de sommet et d'appui 14. Ils sont reliés à deux panneaux de réception 9 par deux lignes de pliage de fond 10a. Dans le flan 7 en volume, les deux panneaux d'entretoise 13 sont disposés l'un contre l'autre par leurs secondes faces et de façon au moins sensiblement parallèles aux panneaux de rive 11, donc de façon au moins sensiblement orthogonale aux panneaux de réception 9. Dans cette situation, les deux panneaux d'entretoise 13 n'ont pas à être obligatoirement solidarisés positivement directement l'un contre l'autre par leurs secondes faces, étant maintenus dans cette position relative par suite de la présence de la coiffe 8. Qui peut le plus pouvant le moins, une telle solidarisation, bien que non indispensable, peut être prévue.

Les panneaux de rive 11 et les panneaux d'entretoise 13 ont la même orientation par rapport aux panneaux de réception 9, se suivant le long de la direction transversale, les lignes de pliage 10a, 10b, 14 et les bords 12 étant au moins sensiblement parallèles entre eux dans la direction longitudinale.

D'autre part, les panneaux de rive 11 et les panneaux d'entretoise 13 ont au moins sensiblement la même dimension en direction longitudinale (ici appelée conventionnellement longueur) et en direction transversale (ici appelée conventionnellement largeur). Cette longueur analogue est comptée entre deux bords libres 15, disposés au moins sensiblement parallèlement à la direction transversale et limitant le flan 7 de part et d'autre. Les bords libres 15 sont les bords libres des panneaux de réception 9, des panneaux de rive 11, des panneaux d'entretoise 13, le flan 7 ne comportant que les deux panneaux de rive 11, et non deux paires de panneaux de rive sur quatre côtés du flan 7, deux à deux parallèles et deux à deux perpendiculaires. Cette largeur analogue en question est comptée, s'agissant du panneau de rive 11, entre la ligne de pliage de fond 10b et le bord de sommet et d'appui 12 et, s'agissant du panneau d'entretoise 13, entre la ligne de pliage de fond 10a et la ligne de pliage de sommet et d'appui 14.

Selon l'invention, et dans sa plus grande généralité, l'un au moins des panneaux de rive 11 et/ou des panneaux d'entretoise 13 comporte, sur son bord de sommet et d'appui 12, sa ligne de pliage de sommet et d'appui 14, au moins une partie saillante 16a (panneau de rive 11), 16b (panneau d'entretoise 13).

Dans la réalisation représentée, les deux panneaux de rive 11 et les deux panneaux d'entretoise 13 de la paire de panneau d'entretoise 13 comportent chacun une partie saillante 16a, 16b, chacune d'elles en deux sections 16aa, 16ab et 16ba et 16bb. Cette réalisation n'est qu'exemplative et nullement limitative. Pour des raisons de commodité, la description est faite plus spécialement en relation avec cette réalisation, l'homme du métier pouvant aisément la transposer au cas plus général où l'un au moins seulement des panneaux de rive 11 et/ou des panneaux d'entretoise 13 comporte au moins une partie saillante 16a, 16b, comme il a été indiqué.

Une partie saillante 16a, 16b s'étend sensiblement dans le plan du panneau de rive 11, du panneau d'entretoise 13, transversalement, à savoir dans la direction sensiblement orthogonale et dans le sens opposé à la ligne de pliage de fond 10b, 10a du panneau de rive 11, du panneau d'entretoise 13.

D'autre part, selon l'invention, et dans sa plus grande généralité, l'un au moins des panneaux de réception 9 comporte, attenant à sa ligne de pliage de fond 10b, 10a, avec un panneau de rive 11, un panneau d'entretoise 13, au moins une partie traversante 17a (panneau de rive 11), 17b (panneau d'entretoise 13). Une telle partie traversante (ouverture, trou, fente) est agencée pour permettre une introduction sensiblement dans le plan du panneau de rive 11, du panneau d'entretoise 13, dans la direction sensiblement orthogonale au panneau de réception 9.

Dans la réalisation représentée, les deux panneaux de réception 9 comportent chacun une partie traversante 17a, 17b, chacune d'elles en deux sections 17aa, 17ab et 17ba et 17bb. Cette réalisation n'est qu'exemplative et nullement limitative. Pour des raisons de commodité, la description est faite plus spécialement en relation avec cette réalisation, l'homme du métier pouvant aisément la transposer au cas plus général où l'un au moins seulement des panneaux de réception 9 comporte au moins une partie traversante 17a, 17b, comme il a été indiqué.

La partie saillante 16a, 16b, et la partie traversante, 17a, 17b, respectivement, sont de tailles et sont positionnées de façon relative sur le bord de sommet et d'appui 12, la ligne de pliage de sommet et d'appui 14 et la ligne de fond 10a, 10b, de sorte que, le flan 7 étant en volume, d'une part, la partie saillante 16a, 16b de ce flan 7 coopère avec une partie traversante 17a, 17b d'un autre flan analogue en volume disposé à l'aplomb et au-dessus et, d'autre part, la partie traversante, 17a, 17b de ce flan 7 coopère avec une partie saillante 16a, 16b d'un autre flan analogue en volume disposé à l'aplomb au-dessous.

Afin d'assurer cette coopération des parties saillantes 16a, 16b et des parties traversantes 17a, 17b, l'enveloppe frontale d'une partie saillante 16a, 16b est inférieure au contour frontal d'une partie traversante 17a, 17b. Dans une réalisation particulière, cette enveloppe et ce contour sont ajustées pour assurer une coopération sans jeu substantiel.

Dans la réalisation représentée, une partie traversante 17a, 17b s'étend en partie sur un panneau de réception 9 et en partie sur le panneau de rive 11 ou sur le panneau d'entretoise 13 adjacent à ce panneau de réception 9. La partie traversante 17a, 17b, est ainsi à cheval sur la ligne de pliage de fond 10b, 10a, entre le panneau de réception 9 et le panneau de rive 11 en question ou le panneau d'entretoise 13 en question. Cette réalisation n'est toutefois as limitative.

Dans la réalisation représentée, une partie saillante 16a, 16b, une partie traversante 17a, 17b a en élévation une forme générale polygonale ou s'inscrivant dans une enveloppe de forme générale polygonale, en particulier une forme générale rectangulaire (par exemple une forme carrée). De plus, dans la réalisation représentée, une partie saillante 16a, 16b et une partie traversante 17a, 17b ont en élévation une forme analogue. Ces réalisations ne sont toutefois pas limitatives.

Comme déjà indiqué, une partie saillante 16a, 16b, une partie traversante 17a, 17b peut être en plusieurs sections 16aa, 16ab, 16ba, 16bb, 17aa, 17ab, 17ba, 17bb. Ces différentes sections de partie saillante 16a, 16b, de partie traversante 17a, 17b, sont analogues, coplanaires, et espacées le long de la direction longitudinale. Dans une réalisation, la ou les parties saillantes 16a, 16b, et la ou les parties traversantes 17a, 17b sont toutes en un même nombre de sections. Ainsi, dans la réalisation représentée, chaque partie saillante 16a, 16b et chaque partie traversante 17a, 17b est en deux sections. Cette réalisation n'est toutefois as limitative.

D'autre part, selon une réalisation, les sections d'une partie saillante 16a, 16b, ou d'une partie traversante 17a, 17b, sont espacées et sensiblement également réparties le long du bord de sommet et d'appui 12, de la ligne de pliage de sommet et d'appui 14, ou de la ligne de pliage de fond 10a, 10b, où elles se trouvent.

Afin d'illustrer la réalisation, il peut être indiqué qu'une partie saillante 16a, 16b s'étend à partir du bord de sommet et d'appui 12 ou de la ligne de pliage de sommet et d'appui 14 où elle se trouve et dans la direction sensiblement orthogonale et dans le sens opposé à la ligne de pliage de fond 10b du panneau de rive 11 ou du panneau d'entretoise 13 qui la comporte, sur une longueur qui est une petite fraction de la largeur transversale des panneaux de rive 11 et des panneaux d'entretoise 13. En particulier, cette fraction est comprise entre de l'ordre de 5% à 30%, et plus spécialement comprise entre de l'ordre de 10% à 20%. Ces réalisations ne sont toutefois pas limitatives.

Toujours, afin d'illustrer la réalisation, il peut être indiqué qu'une partie saillante 16a, 16b et/ou une partie traversante 17a, 17b - en une ou en plusieurs sections -, s'étend au total le long du bord de sommet et d'appui 12, de la ligne de pliage de sommet et d'appui 14, de la ligne de pliage de fond 10a, 10b où elle se trouve, sur une longueur qui est une fraction de la longueur dudit bord de sommet et d'appui 12 de ladite ligne de pliage de sommet et d'appui 14, de ladite ligne de pliage de fond 10a, 10b telle que comprise entre de l'ordre de 15% à 35%, et plus spécialement comprise entre de l'ordre de 18% à 28%. Ces réalisations ne sont toutefois pas limitatives.

Selon la réalisation représentée, la partie saillante 16b du premier panneau d'entretoise 13 d'une paire de panneaux d'entretoise 13 est limitée et formée par une échancrure du second panneau d'entretoise 13 de la même paire de panneaux d'entretoise 13. Avec une telle réalisation, la ligne de pliage de sommet et d'appui 14 entre le premier panneau d'entretoise 13 et le second panneau d'entretoise 13 est interrompue dans la partie saillante 16b. Cette réalisation n'est toutefois as limitative.

La réalisation des parties saillantes 16a, 16b et des parties traversantes 17a, 17b, est telle que la stabilité de la superposition de deux emballages 4 est excellente, ce qui autorise des parties saillantes 16a, 16b qui s'étendent à partir du bord de sommet et d'appui 12 ou de la ligne de pliage de sommet et d'appui 14 sur une petite longueur qui est une très petite fraction de la largeur transversale des panneaux de rive 11 et des panneaux d'entretoise 13.

Selon la réalisation représentée, les panneaux de réception 9, comportent un ou plusieurs segments découpés 18 limitant un ou plusieurs volets 18a. Le flan 7 étant en volume, le ou les volets 18a sont érigés par rapport aux panneaux de réception 9, dans la même direction que les panneaux de rive 11 et les panneaux d'entretoise 13. Ce ou ces volets 18a ont pour fonction de caler les objets 1 vers leurs parois de fond 2b. Bien entendu, la disposition et le nombre des segments découpés sont adaptés à la forme et au nombre de pots 1a ou analogue formant un objet 1. Cette réalisation n'est toutefois pas limitative.

Selon la réalisation représentée, les deux panneaux de rive 11, comportent une ouverture 19. Le flan 7 étant en volume, les deux ouvertures 19 ont pour fonction de favoriser l'aération (ce qui est important dans le cas d'un contenu devant être maintenu au frais), et/ou ont pour fonction de permettre la préhension du paquet 3. Cette réalisation n'est toutefois as limitative.

Selon la réalisation représentée, et de façon similaire, les deux panneaux d'entretoise 13 de la paire de panneaux d'entretoise 13, comportent des ouverture 20, venant en coïncidence dans le flan 7 en volume. Ces ouvertures 20 ont pour fonction de favoriser l'aération. Cette réalisation n'est toutefois as limitative.

Les flans 7 à plat représentés sur les figures 1 et 3 sont analogues, si ce n'est que, s'agissant de la figure 1, le flan 7 est prévu pour une couche unique d'objets 5, cette couche comportant deux objets 1, chacun consistant en quatre pots 1a ou analogue sur deux rangées longitudinales et deux rangées transversales, soit en tout huit pots 1a ou analogue, tandis que, s'agissant de la figure 3, le flan 7 est prévu pour deux couches d'objets 5, chacune comportant deux objets 1, chacun consistant en quatre pots 1a ou analogue sur deux rangées longitudinales et deux rangées transversales, soit en tout seize pots 1a ou analogue. Ces réalisations ne sont toutefois pas limitatives.

Un tel flan 7 à plat peut être mis en volume, comme représenté sur les figures 4, 5, 7 et 8.

Dans ce cas, les deux panneaux de réception 9 sont disposés de façon au moins sensiblement coplanaire et côte à côte transversalement, en particulier sont disposés au moins sensiblement horizontalement, de sorte à former une surface d'appui intérieure et inférieure de réception d'objets 1, les objets 1 reposant ainsi sur leurs premières faces des panneaux de réception 9.

Les deux panneaux de rive 11 sont disposés de façon au moins sensiblement orthogonale aux panneaux de réception 9, en particulier sont disposés au moins sensiblement verticalement.

Les deux panneaux d'entretoise 13 de la paire de panneaux d'entretoise 13 sont disposés l'un contre l'autre par leurs secondes faces 7b et de façon au moins sensiblement orthogonale aux panneaux de réception 9 et dans le même sens que les deux panneaux de rive 11, en particulier sont disposés au moins sensiblement verticalement.

Les parties saillantes 16a, 16b s'étendent sensiblement dans le plan du panneau de rive 11, du panneau d'entretoise 13, la comportant, dans la direction sensiblement orthogonale et dans le sens opposé à la ligne de pliage de fond 10b, 10a du panneau de rive 11 en question, du panneau d'entretoise 13 en question. Ces parties saillantes 16a, 16b sont situées en partie supérieure du flan 7 en volume et sont dirigées vers le haut. Inversement, les parties traversantes 17a, 17b sont situées en partie inférieure du flan 7 en volume.

Avec un tel flan 7 en volume, et dans la réalisation représentée, il existe deux ouvertures 15a de part et d'autre sur les deux côtés perpendiculaires aux panneaux de rive 11, du fait qu'il n'y a que deux panneaux de rive et non quatre.

Un tel flan 7 en volume permet de réaliser l'emballage 4 qui comporte, en combinaison, ce flan 7 en volume et la coiffe 8, lesquels sont solidarisés rigidement l'un à l'autre tête-bêche, de sorte à maintenir les pots 1a ou analogue en position.

Dans l'emballage 4, les panneaux de réception 9 ont pour fonction de former une surface d'appui intérieure et inférieure de réception d'objets 1, les deux panneaux de rive 11 ont pour fonction de former, sur chaque côté d'une, et comme représenté d'une seule, paire de côtés, une rive latérale des objets 1 vers l'extérieur de l'emballage 4, et les panneaux d'entretoise 13, situés à l'intérieur de l'emballage 4 ont pour fonction de former une rive latérale des objets 1, vers l'intérieur. En outre, les panneaux de rive 11 et les panneaux d'entretoise 13 assurent la résistance du paquet 3 à la compression (en direction verticale) en formant des sortes de poutres, celles-ci étant réparties, à la fois latéralement (panneaux de rive 11) et médianement (panneaux d'entretoise 13). Quant aux parties saillantes 16a, 16b et aux parties traversantes 17a, 17b, elles ont pour fonction d'assurer la stabilité de la superposition de deux emballages 4. Quant aux deux ouvertures 15a de part et d'autre sur les deux côtés perpendiculaires aux panneaux de rive 11, elles ont pour fonctions de permettre la visualisation des pots 1a ou analogue et leur ventilation.

En référence tout particulièrement aux figures 2, 4 et 5, l'on décrit maintenant plus spécialement la coiffe 8.

La coiffe 8 comprend, en premier lieu, une partie de couverture 21, supérieure, située à l'aplomb et au-dessus de la paire de panneaux de réception 9.

La partie de couverture 21 coopère avec, et en particulier est en appui sur, les deux bords de sommet et d'appui 12 des deux panneaux de rive 11 et la ligne de pliage de sommet et d'appui 14 des panneaux d'entretoise 13, lesquels bords et lignes 12, 13 sont au moins sensiblement coplanaires et dans un plan au moins sensiblement horizontal, comme précédemment exposé.

Avec cette disposition, les panneaux de réception 9 et la coiffe 8 limitent entre eux un espace d'emballage d'objets 22. Cet espace d'emballage d'objets 22 comporte, dans la réalisation représentée, deux compartiments 22a, 22b, disposés côte à côte transversalement. Ces deux compartiments 22a, 22b sont séparés l'un de l'autre par la paire de panneaux d'entretoise 13 disposés l'un contre l'autre. Les deux compartiments 22a, 22b sont ainsi aptes à recevoir deux objets 1. Les deux compartiments 22a, 22b sont pourvus des deux ouvertures de part et d'autre sur les deux côtés perpendiculaires aux panneaux de rive 11. La réalisation décrite peut être généralisée, l'espace d'emballage d'objets 22 pouvant comprendre un plus grand nombre de compartiments tels que 22a, 22b, selon le nombre de paires de panneaux d'entretoise 13.

La coiffe 8 comprend, en deuxième lieu, une partie de solidarisation 23, solidarisée au flan 7 en volume, en particulier solidarisée aux deux panneaux de rive 11,

En troisième lieu, la coiffe 8 ménage des passages de coiffe 24 pour le passage des parties saillantes 16a et 16b du flan 7 en volume. Dans l'emballage 4 ainsi réalisé, les parties saillantes 16a et 16b du flan 7 en volume saillent au-dessus de la partie de couverture de la coiffe.

D'autre part, dans l'emballage 4, les parties traversantes 17a et 17b du flan 7 en volume sont laissées libres et à découvert, sans être occultées de manière à pouvoir recevoir des parties saillantes 16a et 16b d'un autre emballage placé en-dessous de celui dont il a été question.

La coiffe 8 peut faire l'objet de différentes réalisations.

Dans la réalisation représentée sur les figures 2, 4 et 5, la coiffe 8 est formée par un flan en volume, du type en carton ou analogue, avec un panneau de couverture 21 et deux, et dans la réalisation représentée seulement deux, rabats de solidarisation 23, latéraux et analogues, situés de part et d'autre du panneau de couverture 21 et reliés à celui-ci par deux lignes de pliage de coiffe 25.

Les deux rabats 23 viennent contre les deux panneaux de rive 11 du flan 7 en volume, typiquement vers l'extérieur de l'emballage 4 et sont solidarisés aux deux panneaux de rive 11, par exemple par collage, soudage, agrafage ou analogue. Etant donné que le flan 7 ne comporte dans la réalisation représentée que deux panneaux de rive, et non quatre, comme pour une barquette, la coiffe 8 ne comporte elle-aussi que deux rabats 23 et non quatre, de sorte à laisser libres les deux ouvertures 15a de part et d'autre sur les deux côtés perpendiculaires aux panneaux de rive 11.

Le panneau de couverture 21 comporte des passages de coiffe 24 en forme de parties traversantes de coiffe 24. Ces parties traversantes de coiffe 24 sont localisées, d'une part, attenantes à la ligne de pliage de coiffe 25 et, d'autre part, au droit d'une paire de panneaux d'entretoise 13 du flan 7 en volume.

Les parties traversantes de coiffe 24 et les parties saillantes 16a et 16b du flan 7 en volume sont respectivement de tailles et positionnées de façon relative de sorte qu'une partie saillante 16a, 16b du flan 7 en volume traverse une partie traversante de coiffe 24 et saille de la face extérieure et supérieure 26 du panneau de couverture 21 de la coiffe 8. Cette réalisation n'est qu'exemplative et nullement limitative, l'homme du métier pouvant aisément la transposer au cas plus général relatif au flan 7, portant notamment sur le nombre et la disposition des panneaux d'entretoise 13 et sur le nombre et la disposition des partie saillante 16a, 16b.

A l'instar de ce qui a été exposé précédemment pour le flan 7, et conformément à la réalisation représentée, l'enveloppe frontale d'une partie saillante 16a, 16b du flan 7 en volume est inférieure au contour frontal d'une partie traversante de coiffe 24, de sorte à assurer leur coopération. En particulier, cette enveloppe et ce contour sont ajustés pour assurer une coopération sans jeu substantiel. Cette réalisation n'est toutefois pas limitative.

Dans la réalisation représentée, la coiffe 8 comporte des parties traversantes de coiffe 24 en nombre égal et avec une disposition analogue aux parties saillantes 16a et 16b du flan 7 en volume. Cette réalisation n'est toutefois pas limitative.

A l'instar des parties traversantes 17a et 17b de flan 7, et conformément à la réalisation représentée, les parties traversantes de coiffe 24 s'étendent en partie sur le panneau de couverture 21 de la coiffe 8 et en partie sur un rabat 23 de la coiffe 8, en étant par conséquent à cheval sur leur ligne de pliage de coiffe correspondante 25. Cette réalisation n'est toutefois pas limitative.

A l'instar des parties traversantes 17a et 17b de flan, et conformément à la réalisation représentée, les parties traversantes de coiffe 24 sont en plusieurs sections analogues, espacées, coopérant avec une partie saillante 16a, 16b du flan 7 en volume qui est elle-aussi en plusieurs sections. Cette réalisation n'est toutefois pas limitative.

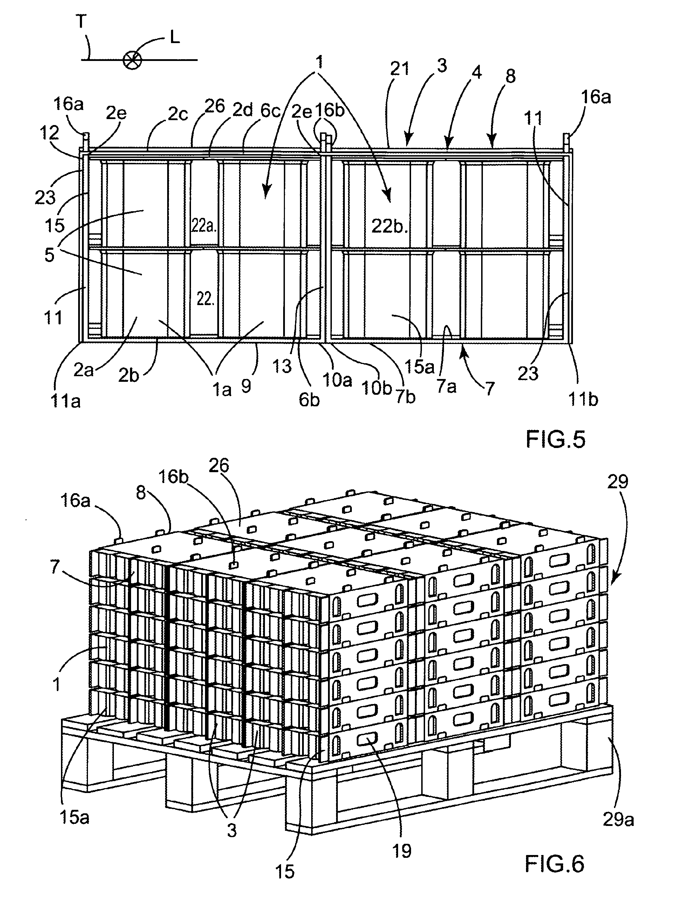

Comme il est représenté sur la figure 5, le panneau de couverture 21 de la coiffe 8 comporte un ou plusieurs segments découpés 27, limitant une ou plusieurs parties 27a aptes à être érigées au-dessus du panneau de couverture 21, en vue de former un moyen de préhension. Cette réalisation n'est toutefois pas limitative.

Comme il est également représenté sur la figure 5, les rabats 23 de la coiffe 8 comportent des ouvertures 28 aptes à coïncider avec les ouvertures d'aération et/ou de préhension 19 du flan 7 en volume. Cette réalisation n'est toutefois pas limitative.

Comme il est également représenté sur la figure 5, la coiffe 8 ne saille pas du flan 7 en volume d'un côté ou de l'autre dans la direction longitudinale où sont les ouvertures, c'est-à-dire au-delà de ses bords libres 15. Cette réalisation n'est toutefois pas limitative.

Dans d'autres réalisations pouvant être envisagées, la coiffe 8 est formée par un tronçon de bande ou de lien tendu comprenant au moins une partie de couverture 21 et deux rabats 23, ou par un tronçon de gaine ou de lien fermé sur lui-même comprenant au moins une partie de couverture 21, une partie inférieure et deux rabats 23, le tronçon de bande ou de lien ou de gaine ou de lien fermé sur lui-même étant solidarisé au flan 7 en volume par collage, soudage, agrafage, serrage ou analogue. Ces autres réalisations présentent les caractéristiques et les avantages précédemment indiqués en relation avec la réalisation de coiffe 8 représentée.

Un tel emballage 4 permet de réaliser un paquet 3 comprenant un tel emballage 4 et au moins une couche 5 d'au moins deux objets 1.

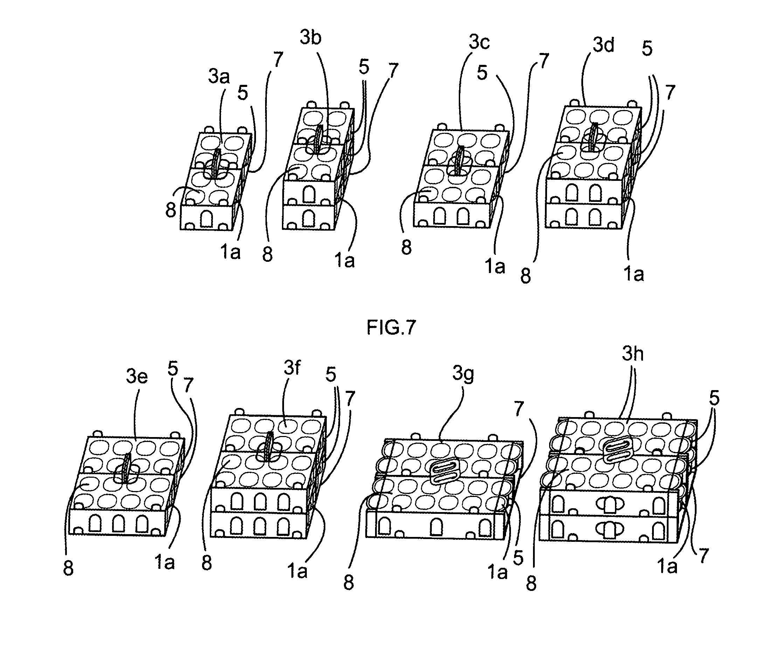

Un tel paquet 3 est plus spécialement représenté sur la figure 5 et sur la figure 7.

La couche inférieure d'objets 5 repose par sa face inférieure 6b sur la surface d'appui intérieure et inférieure des panneaux de réception 9. Les deux panneaux de rive 11 forment une rive latérale des objets 1 vers l'extérieur, sur chaque côté d'une paire de côtés du paquet 3. Les panneaux d'entretoise 13 forment une rive latérale des objets 1 vers l'intérieur. Les deux objets 1 se trouvent dans les deux compartiments 22a et 22b, séparés par une paire de panneaux d'entretoise 13. Dans la réalisation représentée sur les figures 5 et 7, le paquet 3 est fermé sur deux côtés parallèles où se trouvent les panneaux de rive 11 et les rabats 23 et ouvert sur les deux autres côtés perpendiculaires aux panneaux de rive 11 et aux rabats 23, par les ouvertures 15a.

Dans un tel paquet 3 l'encombrement de la ou des couches d'objets 5 dans la direction orthogonale aux panneaux de réception 9 et à la partie de couverture 21 de la coiffe (direction axiale verticale) et ce entre la face la plus inférieure 6b et la face la plus supérieure 6c de la ou des couches d'objets 5, est analogue, ou au plus égal, à l'écartement entre la face intérieure et supérieure des panneaux de réception 9 formant la surface d'appui intérieure et inférieure, et la face intérieure et inférieure de la partie de couverture 21. Ainsi, la face intérieure et inférieure de la partie de couverture 21 vient contre ou est au voisinage, notamment immédiat, de la face supérieure 6c de la couche supérieure d'objets 5, la ou des parties saillantes du flan en volume saillant au-dessus de la partie de couverture de la coiffe.

La figure 7 illustre huit variantes possibles de paquets 3 selon l'invention, selon huit configurations différentes, non limitatives. De gauche à droite, il est ainsi représenté :
- un emballage 3a avec huit pots ou analogue en une seule couche, chaque couche comportant deux plaquettes de quatre pots ou analogue chacune, dans un agencement 2X2,
- un emballage 3b avec seize pots ou analogue en deux couches de huit pots, chaque couche comportant deux plaquettes de quatre pots ou analogue chacune, dans un agencement 2X2,
- un emballage 3c avec douze pots ou analogue en une seule couche, chaque couche comportant deux plaquettes de six pots ou analogue chacune, dans un agencement 2X3,
- un emballage 3d avec vingt quatre pots ou analogue en deux couches de douze pots, chaque couche comportant deux plaquettes de six pots ou analogue chacune, dans un agencement 2X3,
- un emballage 3e avec seize pots ou analogue en une seule couche, chaque couche comportant deux plaquettes de huit pots ou analogue chacune, dans un agencement 2X4,
- un emballage 3f avec trente deux quatre pots ou analogue en deux couches de seize pots, chaque couche comportant deux plaquettes de huit pots ou analogue chacune, dans un agencement 2X4,
- un emballage 3g avec vingt quatre pots ou analogue en une seule couche, chaque couche comportant deux plaquettes de douze pots ou analogue chacune, dans un agencement 2X6,
- un emballage 3h avec quarante huit pots en deux couches de vingt quatre pots ou analogue, chaque couche comportant deux plaquettes de douze pots ou analogue chacune, dans un agencement 2X6.

Comme représenté sur la figure 6, l'invention concerne une charge palettisée d'objets 29, comprenant une palette 29a sur laquelle reposent des paquets 3 tels qu'ils ont été précédemment décrits.

Ces paquets 3 sont disposés les uns à côté des autres et les uns sur les autres à l'aplomb. La face extérieure et inférieure des panneaux de réception 9 d'un paquet supérieur 3 repose sur la face extérieure et supérieure d'une partie de couverture 21 d'un paquet inférieur 3. Et les parties saillantes 16a, 16b dirigées vers le haut d'un paquet inférieur 3 coopèrent avec les parties traversantes 17a, 17b d'un paquet supérieur 3.

La réalisation d'une telle charge palettisée 29 est possible, sans la nécessité de moyens d'emballage supplémentaire de chaque paquet 3 ou de plusieurs paquets 3 disposés côte à côte.

Ainsi, l'emballage 4 permet à lui seul, de réaliser un paquet 3 et d'assurer la fonction de permettre de grouper et de maintenir une pluralité de pots 1a ou analogue agencés en plusieurs objets 1, de les transporter, le cas échéant sous la forme d'une charge palettisée 29, de les présenter à la vente au client acheteur, de permettre leur saisie et leur manipulation par le client acheteur. Le fabricant du produit dans les pots 1a ou analogue réalise des paquets 3, ensuite palettisés, le plus souvent, pour former des charges palettisées 29 envoyées aux lieux de vente. Sur le lieu de vente, les paquets 3 sont enlevés de la charge palettisée 29 et peuvent être mis directement en rayon pour la présentation à le vente et la vente. Et le client acheteur se saisit d'un ou de plusieurs paquets 3.

Avec un emballage 4 et un paquet 3 tels que décrits, l'on réalise un système d'emballage pour une ou plusieurs couches d'objets 1, selon la définition qui a été donnée à ce terme, plus spécialement comportant des pots 1a, ou analogue qui, à la fois, permette d'avoir des pots 1a ou analogue d'épaisseur plus faible que celle des pots 1a connus, par exemple d'une épaisseur inférieure à environ 0,7 mm, 0,8 mm, d'avoir une moindre consommation de matière d'emballage pour la réalisation du flan 7 et de la coiffe 8 et d'avoir une excellente résistance à la compression, les pots 1a ou analogue n'encaissant pas les forces de compression, appliquées aux panneaux de rive 11 et aux panneaux d'entretoise 13. Un tel emballage 4, polyvalent, permet d'éliminer les emballages superflus. Selon les souhaits, les pots 1a ou analogue peuvent être enveloppés d'une jaquette ou non. La mise en présentation des pots 1a ou analogue est facilitée. La gestion des emballages sur les points de vente est très minimisée. Dans le cas où plusieurs couches de paquets 3 sont superposées et empilées, elles ne peuvent se déplacer les unes par rapport aux autres. La ventilation des pots 1a ou analogue est préservée et même améliorée. Un tel emballage 4 et un tel paquet 3 apportent du confort et de la visibilité. Ils peuvent comporter une ou plusieurs poignées de manutention.

Compte tenu que le terme « pot » n'est en aucun cas limitatif, ce qui a été dit à son sujet vaut pour un emballage primaire faisant partie du paquet 3. Ainsi, un tel emballage primaire peut être d'épaisseur réduite, juste suffisante pour contenir son contenu, puisque l'emballage primaire n'est pas soumis à des forces de compression.

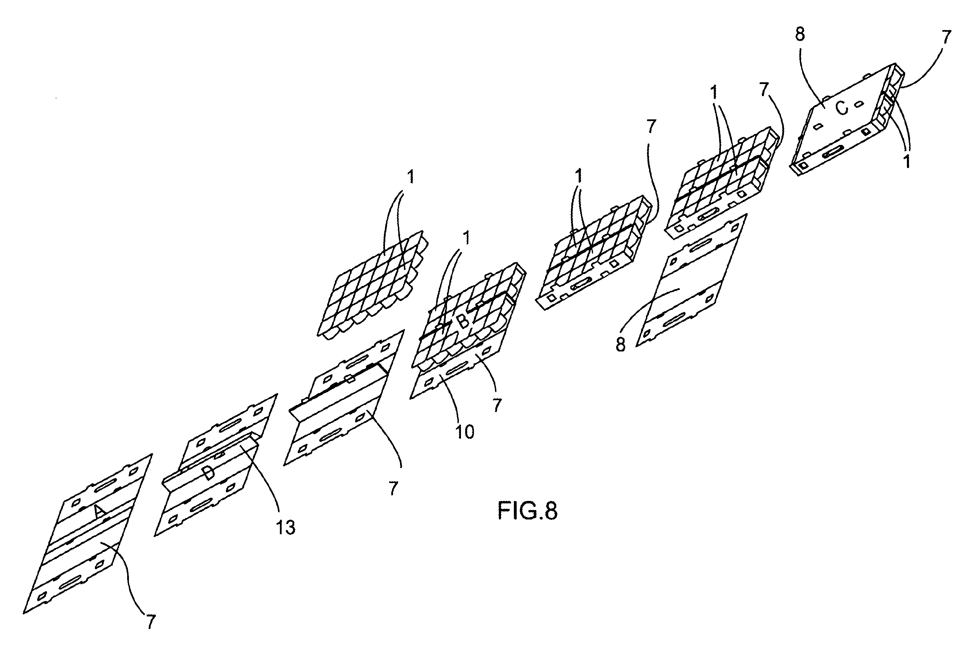

L'invention a également pour objet le procédé de réalisation d'un paquet 3, tel qu'il a été décrit et une installation pour la mise en oeuvre de ce procédé. On se réfère en particulier aux figures 8 et 9 qui sont analogues, la figure 8 illustrant plus spécialement le procédé et la figure 9 illustrant plus spécialement l'installation.

Dans le procédé, tout d'abord, on a à disposition au moins deux objets 1, on a à disposition un flan à plat 7, et on a à disposition une coiffe 8 et ce grâce à des moyens qui peuvent être des moyens fixes tels que des magasins auxquels sont associés des moyens de manipulation tels que des robots ou analogue, ou des moyens mobiles tels que des convoyeurs.

Par exemple, l'on peut prévoir un convoyeur général 30 avec en amont un magasin 31a pour les flans 7 à plat et un robot 31b (dont seule la tête est représentée schématiquement) apte à déposer des flans 7 à plat, successivement, sur le convoyeur 30, vers une position amont 30a (référence A sur la figure 8).

L'on peut aussi prévoir vers une position intermédiaire 30b du convoyeur général 30, une amenée 32a des objets 1, telle que l'extrémité aval d'un convoyeur d'objets 32b, et un robot 32c (dont seule la tête est représentée schématiquement) apte à déposer des objets, successivement, sur les flans 7 portés par le convoyeur 30, vers la position intermédiaire 30b (référence B sur la figure 8).

L'on peut aussi prévoir vers une position aval 30c du convoyeur général 30 un magasin 33a pour les coiffes 8 à plat et un robot 33b (dont seule la tête est représentée schématiquement) apte à déposer des coiffes 8 à plat, successivement, sur les objets 1 eux-mêmes portés par les flans 7 portés et entraînés par le convoyeur 30 d'amont en aval (référence C sur la figure 8).

L'on met en forme le flan 7 qui était à plat et on dispose les objets 1 de sorte à former au moins une couche 5 d'au moins deux objets 1, la couche inférieure d'objets 5 reposant sur la surface d'appui intérieure et supérieure des panneaux de réception 9, et toute autre couche d'objets 5 étant superposée à la couche inférieure. Ces étapes peuvent être plus ou moins imbriquées. Les différentes opérations portant sur la mise en volume du flan 7 et la disposition des objets 1 sont imbriquées les unes avec les autres.

Par exemple, dans une première opération (référence D sur la figure 8), l'on érige les panneaux d'entretoise 13 et à cet effet on les fait pivoter autour des deux lignes de pliage 10a et de la ligne de pliage de sommet et d'appui 14, de sorte que les deux panneaux d'entretoise 13 soient disposés l'un contre l'autre par leurs secondes faces 7b et de façon au moins sensiblement parallèles aux panneaux de rive 11, et ce grâce à des moyens qui peuvent être par exemple des rampes conformées, des poussoirs mobiles, des pinces 34 disposés en aval de la position amont 30a et de part et d'autre du convoyeur 30, les panneaux d'entretoise 13 étant disposés axialement et longitudinalement par rapport au convoyeur 30.

Puis, dans une deuxième opération, en aval de la précédente, l'on dispose les objets 1 sur le flan 7 ainsi partiellement conformé, au moyen du robot 32c disposé en aval des rampes, poussoirs, pinces 34.

Puis, dans une troisième opération, en aval de la précédente, l'on érige les deux panneaux de rive 11, disposés latéralement de part et d'autre du convoyeur 30 et à cet effet on les fait pivoter autour des deux lignes de pliage 10b, et ce grâce à des moyens qui peuvent être par exemple des rampes conformées, des poussoirs mobiles, des pinces 35 disposés en aval du robot 32c et de part et d'autre du convoyeur 30.

Ensuite, l'on dispose la coiffe 8 sur le flan 7 en volume, tête-bêche, la partie de couverture 21 étant placée à l'aplomb et au-dessus des panneaux de réception 9, la face intérieure et inférieure de la partie de couverture 21 venant contre ou au voisinage de la face supérieure 6c de la couche supérieure d'objets 5, la partie de couverture 21 coopérant avec les bords de sommet et d'appui 12 et la ou les lignes de pliage de sommet et d'appui 14 des panneaux de rive 11 et des panneaux d'entretoise 13, la ou des parties saillantes 16a, 16b du flan 7 en volume saillant au-dessus de la partie de couverture 21 de la coiffe 8 et l'on solidarise la coiffe 8 au flan 7 en volume. Les différentes opérations portant sur la disposition et la mise en volume de la coiffe 8 et à sa solidarisation au flan 7 en volume sont imbriquées les unes avec les autres.

Par exemple, dans une première opération l'on saisit les coiffes 8 du magasin 33a avec le robot 33b.

Puis, dans une deuxième opération, l'on dispose de la colle ou autre moyen de solidarisation sur les faces à solidariser des panneaux de rive 11 et des rabats 23, au moyen d'un dispositif adapté.

Puis dans une troisième opération, on fait coopérer la coiffe 8 avec et sur le flan 7 en volume portant les objets 1 et ce grâce à des moyens qui peuvent être par exemple des rampes conformées, des poussoirs mobiles 36 disposés vers la position aval 30c et de part et d'autre du convoyeur 30.

En sortie aval du convoyeur 30, l'on récupère les paquets 3 réalisés, au fur et à mesure.

La description qui précède tant du procédé que de l'installation est purement exemplative et non limitative, compte tenu, notamment, des variantes de réalisation de structure des paquets 3 et des nombreux moyens pouvant être mis en oeuvre pour les opérations de déplacement, pliage, solidarisation... qu'implique le procédé.

Pour réaliser une charge palettisée 29, l'on a à disposition une palette 29a et des paquets.

De façon connue ou à la portée de l'homme du métier, l'on dispose les paquets 3 sur la palette 29a, les uns à côté des autres et les uns sur les autres à l'aplomb.

Le procédé est remarquable en ce qu'il n'y a pas la nécessité de moyens d'emballage supplémentaire de chaque paquet 3 ou de plusieurs paquets 3 disposés côte à côte.

## Revendications

1. Flan (7) à plat, spécialement apte, une fois en volume et combiné et solidarisé à une coiffe (8), à former un emballage (4) pour au moins une couche (5) d'au moins deux objets (1), le flan (7) à plat étant du type en carton ou analogue avec une pluralité de panneaux ayant de la tenue, une pluralité de lignes de pliage parallèles à une direction longitudinale (L) reliant des panneaux adjacents, une première face (7a) et une seconde face (7b), incluant :
- au moins une paire de deux panneaux de réception (9) d'objets (1), limités chacun transversalement par deux lignes de pliage de fond (10b), aptes à être disposés dans le flan (7) en volume de façon au moins sensiblement coplanaire et côte à côte transversalement, de sorte que les objets (1) puissent reposer sur leurs premières faces (7a),
- deux panneaux externes de rive (11), analogues, disposés latéralement, limité chacun transversalement par une ligne de pliage de fond (10b) et un bord de sommet et d'appui (12), relié chacun à un panneau de réception (9) par une ligne de pliage de fond (10b), aptes à être disposés, dans le flan (7) en volume, de façon au moins sensiblement parallèles entre eux et orthogonale aux panneaux de réception (9),
- au moins une paire de deux panneaux internes d'entretoise (13), analogues, disposés médianement, limité chacun transversalement par une ligne de pliage de fond (10a) et une ligne de pliage de sommet et d'appui (14), reliés entre eux par ladite ligne de pliage de sommet et d'appui (14) et reliés à deux panneaux de réception (9) par deux lignes de pliage de fond (10a), aptes à être disposés dans le flan (7) en volume l'un contre l'autre par leurs secondes faces (7b) et de façon au moins sensiblement parallèles aux panneaux de rive (11),
les panneaux de rive (11) et les panneaux d'entretoise (13) ayant la même orientation par rapport aux panneaux de réception (9) et entre leur ligne de pliage de fond (10b, 10a) et soit leur bord de sommet et d'appui (12) soit leur ligne de pliage de sommet et d'appui (14), une largeur transversale analogue,
**caractérisé par le fait que** :
- l'un au moins des panneaux de rive (11) et l'un au moins des panneaux d'entretoise (13) comporte, sur son bord de sommet et d'appui (12), sa ligne de pliage de sommet et d'appui (14), au moins une partie saillante (16a, 16b) s'étendant sensiblement dans le plan dudit panneau de rive (11), et dudit panneau d'entretoise (13), dans la direction sensiblement orthogonale et dans le sens opposé à la ligne de pliage de fond (10b, 10a) dudit panneau de rive (11), et dudit panneau d'entretoise (13),
- l'un au moins des panneaux de réception (9) comporte, attenant à sa ligne de pliage de fond (10b, 10a) avec un panneau de rive (11), et avec un panneau d'entretoise (13), au moins une partie traversante (17a, 17b) pour une introduction sensiblement dans le plan dudit panneau de rive (11), et dudit panneau d'entretoise (13) et dans la direction sensiblement orthogonale audit panneau de réception (9),
- la partie saillante (16a, 16b) et la partie traversante (17a, 17b), respectivement, sont de tailles et sont positionnées de façon relative sur le bord de sommet et d'appui (12), la ligne de pliage de sommet et d'appui (14) et la ligne de fond (10a, 10b), de sorte à être aptes, ledit flan (7) étant en volume, à coopérer, respectivement, avec une partie traversante (17a, 17b) d'un autre flan (7) analogue en volume disposé à l'aplomb et au-dessus et avec une partie saillante (16a, 16b) d'un autre flan (7) analogue en volume disposé à l'aplomb au-dessous.

2. Flan (7) à plat selon la revendication 1, **caractérisé par le fait que** l'enveloppe frontale d'une partie saillante (16a, 16b) est inférieure au contour frontal d'une partie traversante (17a, 17b), de sorte à assurer leur coopération, en particulier la dite enveloppe et ledit contour sont ajustées pour assurer leur coopération sans jeu substantiel.

3. Flan (7) à plat selon l'une quelconque des revendications 1 et 2, **caractérisé par le fait qu'**une partie traversante (17a, 17b) s'étend en partie sur un panneau de réception (9) et en partie sur le panneau de rive (11) ou sur le panneau d'entretoise (13) adjacent audit panneau de réception (9), à cheval sur la ligne de pliage de fond (10b, 10a) entre le panneau de réception (9) et ledit panneau de rive (11) ou ledit panneau d'entretoise (13).

4. Flan (7) à plat selon l'une quelconque des revendications 1 à 3, **caractérisé par le fait que** les deux panneaux de rive (11) et/ou les deux panneaux d'entretoise (13), comportent au moins une partie saillante (16a, 16b) et au moins une partie traversante (17a, 17b).

5. Flan (7) à plat selon l'une quelconque des revendications 1 à 4, **caractérisé par le fait qu'**une partie saillante (16a, 16b) ou une partie traversante (17a, 17b) est en plusieurs sections (16aa, 16ab, 16ba, 16bb, 17aa, 17ab, 17ba, 17bb) analogues, coplanaires, espacées le long de la direction longitudinale (L), en particulier est en deux sections ; et en particulier que la ou les parties saillantes (16a, 16b) et la ou les parties traversantes (17a, 17b) du flan (7) sont toutes en un même nombre de sections.

6. Flan (7) à plat selon l'une quelconque des revendications 1 à 5, **caractérisé par le fait qu'**une partie saillante (16a, 16b) s'étend à partir du bord de sommet et d'appui (12) ou de la ligne de pliage de sommet et d'appui (14) où elle se trouve et dans la direction sensiblement orthogonale et dans le sens opposé à la ligne de pliage de fond (10b, 10a) du panneau de rive (11) ou du panneau d'entretoise (13) qui la comporte, sur une longueur qui est une petite fraction de la largeur transversale des panneaux de rive (11) et des panneaux d'entretoise (13), en particulier une fraction comprise entre de l'ordre de 5% à 30%, plus spécialement comprise entre de l'ordre de 10% à 20% ; et/ou **par le fait qu'**une partie saillante (16a, 16b) et/ou une partie traversante (17a, 17b), en une ou en plusieurs sections, s'étend au total le long du bord de sommet et d'appui (12), de la ligne de pliage de sommet et d'appui (14), de la ligne de pliage de fond (10b, 10a) où elle se trouve, sur une longueur qui est une fraction de la longueur dudit bord de sommet et d'appui (12), de ladite ligne de pliage de sommet et d'appui (14), de ladite ligne de pliage de fond (10b, 10a), en particulier une fraction comprise entre de l'ordre de 15% à 35%, plus spécialement comprise entre de l'ordre de 18% à 28%.

7. Flan (7) à plat selon l'une quelconque des revendications 1 à 6, **caractérisé par le fait que** la partie saillante (16b) du premier panneau d'entretoise (13) d'une paire de panneaux d'entretoise (13) est limitée et formée par une échancrure du second panneau d'entretoise (13) de la paire de panneaux d'entretoise (13), la ligne de pliage de sommet et d'appui (14) entre le premier panneau d'entretoise (13) et le second panneau d'entretoise (13) étant interrompue dans ladite partie saillante (16b).

8. Flan (7) à plat selon l'une quelconque des revendications 1 à 7, **caractérisé par le fait que** sur leurs deux bords (15) disposés sensiblement parallèlement à la direction transversale (T), les panneaux de réception (9) sont dépourvus de panneaux de rive.

9. Flan (7) à plat selon l'une quelconque des revendications 1 à 8, **caractérisé par le fait qu'**au moins un, et en particulier tous les panneaux de réception (9), comportent un ou plusieurs segments découpés (18) limitant un ou plusieurs volets (18a), aptes, le flan (7) étant en volume, à être érigés par rapport aux panneaux de réception (9) dans la même direction que les panneaux de rive (11) et les panneaux d'entretoise (13), en vue de caler les objets (1).

10. Flan (7) à plat selon l'une quelconque des revendications 1 à 9, **caractérisé par le fait qu'**au moins un, et en particulier les deux panneaux de rive (11), comportent au moins une ouverture (19) apte, le flan (7) étant en volume, à l'aération et/ou à la préhension.

11. Flan (7) à plat selon l'une quelconque des revendications 1 à 10, **caractérisé par le fait qu'**au moins un, et en particulier les deux panneaux d'entretoise (13) d'au moins une paire de panneaux d'entretoise (13), comportent au moins une ouverture (20) apte le flan (7) étant en volume, à l'aération.

12. Flan (7) en volume, spécialement apte à faire partie d'un emballage (4), étant combiné et solidarisé à une coiffe (8), réalisé par la mise en volume d'un flan (7) à plat selon l'une quelconque des revendications 1 à 11, dans lequel :
- les deux panneaux de réception (9) de la au moins une paire de panneaux de réception (9) sont disposés de façon au moins sensiblement coplanaire et côte à côte transversalement, en particulier sont disposés au moins sensiblement horizontalement, de sorte que les objets (1) puissent reposer sur leurs premières faces (7a),
- les deux panneaux de rive (11) sont disposés de façon au moins sensiblement orthogonale aux panneaux de réception (9), en particulier sont disposés au moins sensiblement verticalement,
- les deux panneaux d'entretoise (13) de la au moins une paire de panneaux d'entretoise (13) sont disposés l'un contre l'autre par leurs secondes faces (7b) et de façon au moins sensiblement orthogonale aux panneaux de réception (9) et dans le même sens que les deux panneaux de rive (11), en particulier sont disposés au moins sensiblement verticalement,
- la partie saillante (16a, 16b) s'étend sensiblement dans le plan du panneau de rive (11), et du panneau d'entretoise (13), le comportant, dans la direction sensiblement orthogonale et dans le sens opposé à la ligne de pliage de fond (10b, 10a) dudit panneau de rive (11), et dudit panneau d'entretoise (13), en particulier est située en partie supérieure du flan (7) en volume et est dirigée vers le haut, la partie traversante (17a, 17b) étant située en partie inférieure du flan (7) en volume.

13. Emballage (4) pour au moins une couche (5) d'au moins deux objets (1) comportant en combinaison un flan (7) en volume selon la revendication 12 et une coiffe (8), solidarisés rigidement l'un à l'autre tête-bêche, et dans lequel :
- Les panneaux de réception (9) forment une surface d'appui intérieure et inférieure de réception d'objets (1), les panneaux de rive (11) forment une rive latérale des objets (1) vers l'extérieur, et les panneaux d'entretoise (13) forment une rive latérale des objets (1) vers l'intérieur,
- la coiffe (8) comprend une partie de couverture (21) supérieure, située à l'aplomb et au-dessus de la au moins une paire de panneaux de réception (9) et ladite partie de couverture (21) coopère avec, en particulier est en appui sur, les bords de sommet et d'appui (12) et la ou les lignes de pliage de sommet et d'appui (14) des panneaux de rive (11) et des panneaux d'entretoise (13),
- les panneaux de réception (9) et la coiffe (8) limitent entre eux un espace d'emballage (22) d'objets (1), et ledit espace d'emballage (22) d'objets (1) comporte au moins deux compartiments (22a, 22b) côte à côte transversalement, séparés l'un de l'autre par au moins une paire de panneaux d'entretoise (13) disposés l'un contre l'autre, les au moins deux compartiments (22a, 22b) étant aptes à recevoir les au moins deux objets (1),
- la coiffe (8) comprend une partie de solidarisation (23) solidarisée au flan (7) en volume, en particulier solidarisée aux panneaux de rive (11),
- la coiffe (8) ménage un ou des passages de coiffe (24) pour le passage de la ou des parties saillantes (16a, 16b) du flan (7) en volume, laquelle ou lesquelles parties saillantes (16a, 16b) du flan (7) en volume saillent au-dessus de la partie de couverture (21) de la coiffe (8).

14. Emballage (4) selon la revendication 13, **caractérisé par le fait que** la coiffe (8) est formée par un flan en volume, du type en carton ou analogue, avec un panneau de couverture (21) et deux rabats de solidarisation (23) latéraux analogues, situés de part et d'autre du panneau de couverture (21) et reliés à celui-ci par deux lignes de pliage de coiffe (25), les deux rabats (23) venant contre et étant solidarisés aux deux panneaux de rive (11) du flan (7) en volume, le panneau de couverture (21) comportant au moins un passage de coiffe (24) en forme de partie traversante de coiffe (8) localisée attenante à la ligne de pliage de coiffe (25) du panneau de couverture (21) avec au moins un rabat (23) et/ou localisée au droit d'une paire de panneaux d'entretoise (13) du flan (7) en volume, la partie traversante de coiffe (24) et une partie saillante (16a, 16b) du flan (7) en volume étant respectivement de tailles et positionnées de façon relative de sorte qu'une partie saillante (16a, 16b) du flan (7) en volume traverse une partie traversante de coiffe (24) et saille de la face extérieure du panneau de couverture (21) de la coiffe (8).

15. Emballage (4) selon la revendication 14, **caractérisé par le fait que** le panneau de couverture (21) de la coiffe (8) comporte au moins une partie traversante de coiffe (24) attenante à ladite ligne de pliage de coiffe (25), en particulier aux deux lignes de pliage de coiffe (25), et au moins une partie traversante de coiffe (24) au droit d'une paire de panneaux d'entretoise (13), en particulier de chaque paire de panneaux d'entretoise (13).

16. Emballage (4) selon l'une quelconque des revendications 14 et 15, **caractérisé par le fait qu'**une partie traversante de coiffe (25) s'étend en partie sur le panneau de couverture (21) de la coiffe (8) et en partie sur un rabat (23) de la coiffe (8), à cheval sur leur ligne de pliage de coiffe (25) correspondante.

17. Emballage (4) selon l'une quelconque des revendications 14 à 16, **caractérisé par le fait que** le panneau de couverture (21) de la coiffe (8) comporte un ou plusieurs segments découpés limitant une ou plusieurs parties aptes à être érigées au-dessus du panneau de couverture (21), en vue de former un moyen de préhension.

18. Emballage (4) selon l'une quelconque des revendications 14 à 17, **caractérisé par le fait que** le flan (7) en volume et la coiffe (8) sont solidarisés par collage, soudage, agrafage ou analogue.

19. Paquet (3) comprenant un emballage (4) selon l'une quelconque des revendications 14 à 18 et au moins une couche (5) d'au moins deux objets (1), la couche (5) inférieure d'objets (1) reposant par sa face inférieure sur une surface d'appui intérieure et inférieure formée par la face intérieure et supérieure des panneaux de réception (9), les panneaux de rive (11) formant une rive latérale des objets (1) vers l'extérieur, et les panneaux d'entretoise (13) formant une rive latérale des objets (1) vers l'intérieur, les au moins deux objets (1) se trouvant dans les au moins deux compartiments (22a, 22b) côte à côte transversalement de l'espace d'emballage (22) d'objets (1), séparés par une paire de panneaux d'entretoise (13) disposés l'un contre l'autre entre des objets (1), l'encombrement de la au moins une couche (5) d'objets (1) dans la direction orthogonale aux panneaux de réception (9) et à la partie de couverture (21) de la coiffe (8), entre la face la plus inférieure et la face la plus supérieure, étant analogue ou au plus égal à l'écartement entre la face intérieure et supérieure des panneaux de réception (9) et la face intérieure et inférieure de la partie de couverture (21), de sorte que la face intérieure et inférieure de la partie de couverture (21) vienne contre ou soit au voisinage de la face supérieure de la couche (5) supérieure d'objets (1), la ou des parties saillantes (16a, 16b) du flan (7) en volume saillant au-dessus de la partie de couverture (21) de la coiffe (8).

20. Paquet (3) selon la revendication 19, **caractérisé par le fait qu'**il comporte soit une soit plusieurs couches (5) d'objets (1), ces couches (5) étant alors superposées, en particulier directement superposées.

21. Paquet (3) selon l'une quelconque des revendications 19 et 20, **caractérisé par le fait qu'**un objet (1) est un emballage primaire empli d'un contenu, comprenant un ou plusieurs pots (1a) agencées en plusieurs rangées longitudinales et/ou transversales, un pot (1a) ayant une paroi latérale (2a) de forme générale cylindrique ou prismatique, une paroi de fond (2b) et une paroi de sommet (2c), en particulier un opercule, plusieurs pots (1a) étant reliés ensemble, en particulier vers leurs parois de sommet (2c) ; en particulier **par le fait qu'**un objet (1) comporte une collerette périphérique, en particulier une collerette de liaison (2d) de plusieurs pots (1a), le chant (2^{e}) de la collerette (2d) venant contre le panneau de rive (11) et/ou le panneau d'entretoise (13).

22. Charge palettisée (29) d'objets (1) comprenant une palette (29a) sur laquelle reposent une pluralité de paquets (3) selon l'une quelconque des revendications 19 à 21, disposés les uns à côté des autres et les uns sur les autres à l'aplomb, la face extérieure et inférieure des panneaux de réception (9) d'un paquet supérieur (3) reposant sur la face extérieure et supérieure d'une partie de couverture (21) d'un paquet inférieur (3), les parties saillantes (16a, 16b) dirigées vers le haut d'un paquet inférieur (3) coopérant avec les parties traversantes (17a, 17b) d'un paquet supérieur (3), sans la nécessité de moyens d'emballage supplémentaire de chaque paquet (3) ou de plusieurs paquets (3) disposés côte à côte.

23. Procédé de réalisation d'un paquet selon l'une quelconque des revendications 19 à 21 dans lequel :
- on a à disposition au moins deux objets (1),
- on a à disposition un flan (7) à plat selon l'une quelconque des revendications 1 à 11,
- on a à disposition une coiffe (8),
- on met en forme le flan (7),
- on dispose les objets (1) de sorte à former au moins une couche (5) d'au moins deux objets (1), la couche (5) inférieure d'objets (1) reposant sur la face intérieure et supérieure des panneaux de réception (9), et toute autre couche (5) d'objets (1) étant superposée à la couche (5) inférieure,
- on dispose la coiffe (8) sur le flan (7) en volume tête-bêche, la partie de couverture (21) étant placée à l'aplomb et au-dessus des panneaux de réception (9), la face intérieure et inférieure de la partie de couverture (21) venant contre ou au voisinage de la face supérieure de la couche (5) supérieure d'objets (1), la partie de couverture (21) coopérant avec les bords de sommet et d'appui et la ou les lignes de pliage de sommet et d'appui des panneaux de rive (11) et des panneaux d'entretoise (13), la ou des parties saillantes (16a, 16b) du flan (7) en volume saillant au-dessus de la partie de couverture (21) de la coiffe (8),
- on solidarise la coiffe (8) au flan (7) en volume.

24. Procédé de réalisation d'une charge palettisée (29) selon la revendication 22, dans lequel :
- on a à disposition une palette (29a),
- on a à disposition des paquets (3),
- et on dispose les paquets (3) sur la palette (29a), les uns à côté des autres et les uns sur les autres à l'aplomb, sans la nécessité de moyens d'emballage supplémentaire de chaque paquet (3) ou de plusieurs paquets (3) disposés côte à côte.

25. Installation pour la mise en oeuvre du procédé de réalisation d'un paquet selon la revendication 23, qui comprend :
- des moyens d'alimentation en au moins deux objets (1), en flans (7) à plat selon l'une quelconque des revendications 1 à 11, en coiffe (8),
- des moyens de mise en forme des flans (7),
- des moyens pour disposer les objets (1) sur les flans (7),
- des moyens pour disposer une coiffe (8) sur le flan (7) en volume tête-bêche,
- des moyens pour solidariser la coiffe (8) au flan (7) en volume.

## Patentansprüche

1. Flacher Rohling (7), welcher insbesondere dazu eingerichtet ist, sobald er geformt und mit einem Deckel (8) kombiniert und verbunden ist, eine Verpackung (4) für wenigstens eine Schicht (5) von wenigstens zwei Objekten (1) zu bilden, wobei der flache Rohling (7) von der Art eines Kartons oder ähnlichem ist, mit einer Mehrzahl von Platten, welche eine Haltung aufweisen, einer Mehrzahl von parallelen Faltlinien in einer longitudinalen Richtung (L), welche angrenzende Platten verbinden, einer ersten Fläche (7a) und einer zweiten Fläche (7b), umfassend:
- wenigstens ein Paar von zwei Aufnahmeplatten (9) von Objekten (1), welche jeweils transversal von zwei unteren Faltlinien (10b) begrenzt sind, welche dazu eingerichtet sind, in dem geformten Rohling (7) in einer wenigstens im Wesentlichen koplanaren Weise und transversal Seite an Seite angeordnet zu sein, so dass die Objekte (1) auf ihren ersten Flächen (7a) ruhen können,
- zwei ähnliche externe Randplatten (11), welche lateral angeordnet sind, welche jeweils transversal von einer unteren Faltlinie (10b) und einer oberen Tragekante (12) begrenzt sind, welche jeweils mit einer Aufnahmeplatte (9) durch eine untere Faltlinie (10b) verbunden sind, welche dazu eingerichtet sind, in dem geformten Rohling (7) in einer im Wesentlichen parallelen Weise zueinander und orthogonal zu den Aufnahmeplatten (9) angeordnet zu sein,
- wenigstens ein Paar von zwei ähnlichen internen Abstandsplatten (13), welche in einem Median angeordnet sind, welche jeweils transversal durch eine untere Faltlinie (10a) und eine obere Trage-Faltlinie (14) begrenzt sind, welche miteinander durch die obere Trage-Faltlinie (14) verbunden sind und mit den beiden Aufnahmeplatten (9) durch zwei untere Faltlinien (10a) verbunden sind, welche dazu eingerichtet sind, in dem geformten Rohling (7) mit ihren zweiten Flächen (7b) gegeneinander anliegend und wenigstens im Wesentlichen parallel zu den Randplatten (11) angeordnet zu sein, wobei die Randplatten (11) und die Abstandsplatten (13) die gleiche Orientierung bezüglich den Aufnahmeplatten (9) und zwischen ihrer unteren Faltlinie (10b, 10a) aufweisen und entweder ihre obere Tragekante (12) oder ihre obere Trage-Faltlinie (14) eine ähnliche transversale Ausdehnung,
**dadurch gekennzeichnet, dass**
- wenigstens eine der Randplatten (11) und wenigstens eine der Abstandsplatten (13) an seiner oberen Tragekante (12) seine obere Trage-Faltlinie (14) umfasst, wobei wenigstens ein vorstehender Teil (16a, 16b) sich im Wesentlichen in der Ebene der Randplatte (11) und der Abstandsplatte (13) in der im Wesentlichen orthogonalen Richtung und entgegengesetzt zu einer unteren Faltlinie (10b, 10a) der Randplatte (11) und der Abstandsplatte (13) erstreckt,
- wenigstens eine der Aufnahmeplatten (9) angrenzend an seine untere Faltlinie (10b, 10a) mit einer Randplatte (11) und mit einer Abstandsplatte (13) wenigstens ein Durchgangsteil (17a, 17b) für ein Einführen im Wesentlichen in der Richtung der Randplatte (11) und der Abstandsplatte (13) und in der Richtung im Wesentlichen orthogonal zu der Aufnahmeplatte (9) umfasst,
- der vorstehende Teil (16a, 16b) und der Durchgangsteil (17a, 17b) jeweils von Größen sind und derart relativ zu dem Rand der oberen Tragekante (12), der oberen Trage-Faltlinie (14) und der unteren Linie (10a, 10b) sind, dass sie in der Lage sind, wenn der Rohling (7) geformt ist, jeweils mit einem Durchgangsteil (17a, 17b) eines anderen ähnlichen geformten Rohlings (7) zusammenzuwirken, welcher senkrecht und oberhalb angeordnet ist, und mit einem vorstehenden Teil (16a, 16b) eines anderen ähnlichen geformten Rohlings (7), der senkrecht unterhalb angeordnet ist.

2. Flacher Rohling (7) nach Anspruch 1, **dadurch gekennzeichnet, dass** der frontale Umriss eines vorstehenden Teils (16a, 16b) niedriger ist als die frontale Kontur eines Durchgangsteils (17a, 17b), um ihr Zusammenwirken sicherzustellen, wobei insbesondere der Umriss und die Kontur dazu angepasst sind, ihr Zusammenwirken im Wesentlichen spielfrei sicherzustellen.

3. Flacher Rohling (7) nach einem der Ansprüche 1 und 2, **dadurch gekennzeichnet, dass** ein Durchgangsteil (17a, 17b) sich teilweise über eine Aufnahmeplatte (9) und teilweise über die Randplatte (11) oder über die Abstandsplatte (13) benachbart zu der Aufnahmeplatte (9) erstreckt, genau auf der unteren Faltlinie (10b, 10a) zwischen der Aufnahmeplatte (9) und der Randplatte (11) oder der Abstandsplatte (13).

4. Flacher Rohling (7) nach einem der Ansprüche 1 bis 3, **dadurch gekennzeichnet, dass** die beiden Randplatten (11) oder/und die beiden Abstandsplatten (13) wenigstens einen vorstehenden Teil (16a, 16b) und wenigstens einen Durchgangsteil (17a, 17b) umfassen.

5. Flacher Rohling (7) nach einem der Ansprüche 1 bis 4, **dadurch gekennzeichnet, dass** ein vorstehender Teil (16a, 16b) oder ein Durchgangsteil (17a, 17b) in mehreren ähnlichen koplanaren Abschnitten (16aa, 16ab, 16ba, 16bb, 17aa, 17ab, 17ba, 17bb) entlang der longitudinalen Richtung (L) beabstandet ist, insbesondere in zwei Abschnitten; und insbesondere wobei die vorstehenden Teile (16a, 16b) oder wobei die Durchgangsteile (17a, 17b) des Rohlings alle mit einer gleichen Anzahl von Abschnitten sind.

6. Flacher Rohling (7) nach einem der Ansprüche 1 bis 5, **dadurch gekennzeichnet, dass** sich ein vorstehender Teil (16a, 16b) ausgehend von dem oberen Trage-Rand (12) oder von der oberen Trage-Faltlinie (14) erstreckt oder er sich in einer im Wesentlichen orthogonalen Richtung und entgegengesetzt zu der unteren Faltlinie (10b, 10a) der Randplatte (11) oder der Abstandsplatte (13) befindet, die ihn umfasst, über eine Länge, die ein kleiner Bruchteil der transversalen Länge der Randplatten (11) und der Abstandsplatten (13) ist, insbesondere ein Bruchteil, der in der Größenordnung zwischen 5% und 30% liegt, weiter insbesondere in der Größenordnung zwischen 10% und 20% liegt; oder/und dadurch, dass ein vorstehender Teil (16a, 16b) oder/und ein Durchgangsteil (17a, 17b) sich in einem oder mehreren Abschnitten über die gesamte Länge des oberen Trage-Rands (12), der oberen Trage-Faltlinie (14), der unteren Faltlinie (10b, 10a) erstreckt oder es sich über eine Länge, die ein Bruchteil der Länge des oberen Trage-Rands (12), der oberen Trage-Faltlinie (14), der unteren Faltlinie (10a, 10b) ist, befindet, insbesondere ein Bruchteil, der in der Größenordnung zwischen 15% und 35% liegt, weiter insbesondere in der Größenordnung zwischen 18% und 28% liegt.

7. Flacher Rohling (7) nach einem der Ansprüche 1 bis 6, **dadurch gekennzeichnet, dass** der vorstehende Teil (16b) der ersten Abstandsplatte (13) des Paars von Abstandsplatten (13) von einer Aussparung der zweiten Abstandsplatte (13) des Paars von Abstandsplatten (13) begrenzt und gebildet ist, wobei die obere Trage-Faltlinie (14) zwischen der ersten Abstandsplatte (13) und der zweiten Abstandsplatte (13) von dem vorstehenden Teil (16b) unterbrochen ist.

8. Flacher Rohling (7) nach einem der Ansprüche 1 bis 7, **dadurch gekennzeichnet, dass** durch ihre im Wesentlichen parallel in der transversalen Richtung (T) angeordneten Ränder (15) die Aufnahmeplatten (9) frei von Randplatten sind.

9. Flacher Rohling (7) nach einem der Ansprüche 1 bis 8, **dadurch gekennzeichnet, dass** wenigstens eine und insbesondere alle der Aufnahmeplatten (9) ein oder mehrere ausgeschnittene Segmente (18) umfassen, welche eine oder mehrere Klappen (18a) umfassen, welche in der Lage sind, wenn der Rohling (7) geformt ist, bezüglich der Aufnahmeplatten (9) in die gleiche Richtung wie die Randplatten (13) und die Abstandsplatten (13) aufgerichtet zu werden, um die Objekte (1) einzuklemmen.

10. Flacher Rohling (7) nach einem der Ansprüche 1 bis 9, **dadurch gekennzeichnet, dass** wenigstens eine und insbesondere die beiden Randplatten (11) wenigstens eine Öffnung (19) umfassen, welche, wenn der Rohling (7) geformt ist, zur Belüftung oder/und zum Greifen in der Lage ist.

11. Flacher Rohling (7) nach einem der Ansprüche 1 bis 10, **dadurch gekennzeichnet, dass** wenigstens eine und insbesondere die beiden Abstandsplatten (13) des wenigstens einen Paars von Abstandsplatten (13) wenigstens eine Öffnung (20) umfassen, welche, wenn der Rohling (7) geformt ist, zur Belüftung in der Lage sind.

12. Geformter Rohling (7), welcher insbesondere dazu eingerichtet ist, Teil einer Verpackung (4) zu sein, wenn der mit einem Deckel (8) kombiniert und verbunden ist, dadurch gebildet, dass ein flacher Rohling (7) nach einem der Ansprüche 1 bis 11 geformt wird, wobei:
- die beiden Aufnahmeplatten (9) des wenigstens einen Paars von Aufnahmeplatten (9) im Wesentlichen koplanar und transversal Seite an Seite angeordnet sind, insbesondere wenigstens im Wesentlichen horizontal angeordnet sind, so dass die Objekte (1) auf ihren ersten Flächen (7a) ruhen können,
- die beiden Randplatten (11) wenigstens im Wesentlichen orthogonal zu den Aufnahmeplatten (9) angeordnet sind, insbesondere wenigstens im Wesentlichen vertikal angeordnet sind,
- die beiden Abstandsplatten (13) des wenigstens einen Paars von Abstandsplatten (13) mit ihren zweiten Flächen (7b) gegeneinander anliegend und wenigstens im Wesentlichen orthogonal zu den Aufnahmeplatten (9) und im selben Sinn wie die beiden Randplatten (11) angeordnet sind, insbesondere wenigstens im Wesentlichen vertikal angeordnet sind,
- der vorstehende Teil (16a, 16b) sich im Wesentlichen in der Ebene der Randplatte (11) und der Abstandsplatte (13) erstreckt, die ihn umfassen, in der im Wesentlichen orthogonalen Richtung und im entgegengesetzten Sinn zu der unteren Faltlinie (10a, 10b) der Randplatte (11) und der Abstandsplatte (13), wobei er insbesondere im oberen Teil des geformten Rohlings (7) angeordnet und nach oben gerichtet ist, wobei der Durchgangsteil (17a, 17b) im unteren Teil des geformten Rohlings (7) angeordnet ist.

13. Verpackung (4) für wenigstens eine Schicht (5) von wenigstens zwei Objekten (1), umfassend in Kombination einen geformten Rohling (7) nach Anspruch 12 und einen Deckel (8), welche miteinander entgegengesetzt verbunden sind, und wobei:
- die Aufnahmeplatten (9) eine innere und untere Trage-Fläche zur Aufnahme der Objekte (1) bilden, die Randplatten (11) einen Seitenrand der Objekte (1) nach außen bilden und die Abstandsplatten (13) einen Seitenrand der Objekte (1) nach innen bilden,
- der Deckel (8) einen oberen Abdeckteil (21) umfasst, welcher senkrecht und oberhalb des wenigstens einen Paars von Aufnahmeplatten (9) angeordnet ist, und der Abdeckteil (21) mit dem oberen Trage-Rand (12) den oberen Trage-Faltlinien (14) der Randplatten (11) und den Abstandsplatten (13) zusammenwirkt und insbesondere an ihnen getragen ist.
- Die Aufnahmeplatten (9) und der Deckel (8) zwischen einander einen Verpackungsraum (22) für Objekte (1) begrenzen, und der Verpackungsraum (22) für Objekte (1) wenigstens zwei Abteile (22a, 22b) transversal Seite an Seite umfasst, welche das eine vom anderen durch wenigstens ein Paar von Abstandsplatten (13) getrennt sind, welche gegeneinander anliegen, wobei die wenigstens zwei Abteile (22a, 22b) in der Lage sind, die wenigstens zwei Objekte (1) aufzunehmen,
- der Deckel (8) ein Anbringungsteil (23) umfasst, welches an dem geformten Rohling (7) angebracht ist, insbesondere an den Randplatten (11) angebracht ist,
- der Deckel (8) einen oder mehrere Deckeldurchgänge (24) für den Durchgang des einen oder der vorstehenden Teile (16a, 16b) des geformten Rohlings (7) enthält, wobei der oder die vorstehenden Teile (16a, 16b) des geformten Rohlings (7) unter dem Abdeckteil (21 ) des Deckels (8) vorstehen.

14. Verpackung (4) nach Anspruch 13, **dadurch gekennzeichnet, dass** der Deckel (8) durch einen geformten Rohling von der Art eines Kartons oder ähnlichem gebildet ist, mit einer Abdeckplatte (21 ) und zwei ähnlichen lateralen Anbringungslaschen (23), welche an beiden Seiten der Abdeckplatte (21 ) angeordnet sind und mit ihr durch zwei Deckel-Faltlinien verbunden sind, wobei die beiden Laschen (23) gegeneinander kommen und an den beiden Randplatten (11) des geformten Rohlings (7) angebracht sind, wobei die Abdeckplatte (21) wenigstens einen Deckeldurchgang (24) in Form eines Durchgangsteils des Deckels (8) umfassen, welcher benachbart zu der Deckel-Faltlinie (25) der Abdeckplatte (21) mit wenigstens einer Lasche (23) angeordnet ist oder/und zu einem Paar von Abstandsplatten (13) des geformten Rohlings (7) weisend angeordnet ist, wobei der Durchgangsteil des Deckels (24) und ein vorstehender Teil (16a, 16b) des geformten Rohlings (7) von jeweiligen Größen sind und in einer derartigen Weise positioniert sind, dass ein vorstehender Teil (16a, 16b) des geformten Rohlings (7) durch einen Durchgangsteil des Deckels (24) durchtritt und von der äußeren Fläche der Abdeckplatte (21) des Deckels (8) vorsteht.

15. Verpackung (4) nach Anspruch 14, **dadurch gekennzeichnet, dass** die Abdeckplatte (21) des Deckels (8) wenigstens einen Deckeldurchgangsteil (24) benachbart zu der Deckel-Faltlinie (25) umfasst, insbesondere zu den beiden Deckel-Faltlinien (25) und wenigstens einen Deckeldurchgangsteil (24) zu einem Paar von Abstandsplatten (13) weisend, insbesondere zu jedem Paar von Abstandsplatten (13).

16. Verpackung (4) nach einem der Ansprüche 14 und 15, **dadurch gekennzeichnet, dass** ein Deckeldurchgangsteil (25) sich teilweise an der Abdeckplatte (21) des Deckels (8) und teilweise an einer Lasche (23) des Deckels (8) erstreckt, genau auf ihrer entsprechenden Deckel-Faltlinie (25).

17. Verpackung (4) nach einem der Ansprüche 14 bis 16, **dadurch gekennzeichnet, dass** die Abdeckplatte (21) des Deckels (8) ein oder mehrere ausgeschnittene Segmente umfasst, welche einen oder mehrere Teile begrenzen, welche dazu eingerichtet sind, oberhalb der Abdeckplatte (21) aufgerichtet zu werden, um ein Greifmittel zu bilden.

18. Verpackung nach einem der Ansprüche 14 bis 17, **dadurch gekennzeichnet, dass** der geformte Rohling (7) und der Deckel durch Kleben, Schweißen, Klammern oder ähnliches verbunden sind.

19. Paket (3), umfassend eine Verpackung nach einem der Ansprüche 14 bis 18 und wenigstens eine Schicht (5) von wenigstens zwei Objekten (1), wobei die untere Schicht (5) der Objekte (1) mit seiner unteren Fläche eine innere und untere Trage-Fläche hält, welche durch die innere und obere Fläche der Aufnahmeplatten (9) gebildet ist, wobei die Randplatten (11) einen lateralen Rand der Objekte (1) nach außen bilden und die Abstandsplatten (13) einen lateralen Rand der Objekte (1) nach innen bilden, wobei sich die wenigstens zwei Objekte (1) in den wenigstens zwei Abteilen (22a, 22b) transversal Seite an Seite des Verpackungsraums (22) für Objekte (1) befinden, welche durch ein Paar von Abstandsplatten (13) getrennt sind, welche die eine gegen die andere zwischen den Objekten (1) angeordnet sind, wobei der Raumbedarf der wenigstens einen Schicht (5) der Objekte (1) in der orthogonalen Richtung zu den Aufnahmeplatten (9) und zu dem Verschlussteil (21) des Deckels (8), zwischen der untersten Fläche und der obersten Fläche ähnlich oder maximal gleich zu dem Abstand zwischen der innneren und der oberen Fläche der Aufnahmeplatten (9) und der inneren und unteren Fläche des Abdeckteils (21) ist, so dass die innere und untere Fläche des Abdeckteils (21) gegen oder in die Nähe der oberen Fläche der oberen Schicht (5) der Objekte (1) oder der vorstehenden Teile (16a, 16b) des geformten Rohlings (7) kommt, welche oberhalb des Abdeckteils (21) des Deckels (8) vorstehen.

20. Paket (3) nach Anspruch 19, **dadurch gekennzeichnet, dass** es entweder eine oder mehrere Schichten (5) von Objekten (1) umfasst, wobei diese Schichten (5) überlagert sind, insbesondere direkt überlagert sind.

21. Paket nach einem der Ansprüche 19 und 20, **dadurch gekennzeichnet, dass** ein Objekt (1) eine erste mit einem Inhalt gefüllte Verpackung ist, welche einen oder mehrere Töpfe (1a) umfasst, welche in mehreren longitudinalen oder/und transversalen Reihen angeordnet sind, wobei ein Topf (1a) eine laterale Wand (2a) von im Wesentlichen zylindrischer oder prismatischer Form, eine untere Wand (2b) und eine obere Wand (2c) aufweist, insbesondere ein Verschlusselement, wobei mehrere Töpfe (1a) miteinander verbunden sind, insbesondere an ihren oberen Wänden (2c); insbesondere dadurch, dass ein Objekt (1) einen Umfangskragen aufweist, insbesondere einen Kragen zum Verbinden (2d) von mehreren Töpfen (1a), wobei die Kante (2^{e}) des Kragens (2d) gegen die Randplatte (11) oder und die Abstandsplatte (13) kommt.

22. Palettenladung (29) von Objekten (1), umfassend eine Palette (29a), auf welcher eine Mehrzahl von Paketen (3) nach einem der Ansprüche 19 bis 21 ruht, welche seitlich nebeneinander und senkrecht aufeinander angeordnet sind, wobei die äußere und innere Fläche der Aufnahmeplatte (9) eines oberen Pakets (3) auf der äußeren und oberen Fläche eines Abdeckteils (21) eines unteren Pakets (3) ruht, wobei die vorstehenden Teile (16a, 16b) in Richtung der Oberseite eines unteren Pakets (3) gerichtet sind, zusammenwirkend mit den Durchgangsteilen (17a, 17b) eines oberen Pakets (3), ohne die Notwendigkeit von zusätzlichen Verpackungsmitteln für jedes Paket (3) oder mehrere Seite an Seite angeordnete Pakete (3).

23. Verfahren zum Herstellen eines Pakets nach einem der Ansprüche 19 bis 21, wobei:
- wenigstens zwei Objekte (1) zur Verfügung stehen,
- wenigstens ein flacher Rohling (7) nach einem der Ansprüche 1 bis 11 zur Verfügung steht,
- wenigstens ein Deckel (8) zur Verfügung steht,
- der Rohling (7) geformt wird,
- die Objekte (1) so angeordnet werden, dass wenigstens eine Schicht von wenigstens zwei Objekten (1) gebildet wird, wobei die untere Schicht (5) von Objekten (1) auf der inneren und oberen Fläche der Aufnahmeplatten (9) ruht, und jede weitere Schicht (5) von Objekten (1) der unteren Schicht (5) überlagert ist,
- der Deckel (8) auf dem geformten Rohling (7) umgekehrt angebracht wird, wobei der Abdeckteil (21) senkrecht und oberhalb der Aufnahmeplatten (9) platziert wird, wobei die innere und untere Fläche des Abdeckteils (21) gegen oder in die Nähe der oberen Fläche der oberen Schicht (5) der Objekte (1) kommt, wobei der Abdeckteil (21) mit den oberen Trage-Rändern oder den oberen Trage-Faltlinien der Randplatten (11) und der Abstandsplatten (13) oder den vorstehenden Teilen (16a, 16b) des geformten Rohlings (7), welche von dem Abdeckteil (21) des Deckels (8) nach oben vorstehen, zusammenwirkt,
- der Deckel (8) an dem geformten Rohling (7) angebracht wird.

24. Verfahren zum Herstellen einer Palettenladung (29) nach Anspruch 22, wobei:
- eine Palette (29a) zur Verfügung steht,
- Pakete (3) zur Verfügung stehen,
- und die Pakete (3) auf der Palette (29a) angeordnet werden, die einen neben den anderen und die einen senkrecht auf den anderen, ohne die Notwendigkeit von zusätzlichen Verpackungsmitteln für jedes Paket (3) oder mehrere Seite an Seite angeordnete Pakete (3).

25. Einrichtung zum Durchführen des Verfahrens zum Herstellen eines Pakets nach Anspruch 23, umfassend:
- Mittel zum Liefern von wenigstens zwei Objekten (1), von flachen Rohlingen (7) nach einem der Ansprüche 1 bis 11, und Deckeln (8),
- Mittel zum Formen des Rohlings (7),
- Mittel zum Anordnen der Objekte (1) auf den Rohlingen (7),
- Mittel zum umgekehrten Anordnen eines Deckels auf dem geformten Rohling (7),
- Mittel zum Anbringen des Deckels (8) an dem geformten Rohling (7).

## Claims

1. Flat blank (7), especially capable of, once assembled and combined and made integral with a cap (8), forming a package (4) for at least one layer (5) of at least two objects (1), with the flat blank (7) being of the cardboard type or the like with a number of strong panels, a number of fold lines parallel to a longitudinal direction (L) connecting adjacent panels, a first surface (7a) and a second surface (7b), including:
- At least one pair of two panels (9) for receiving objects (1), each delimited transversely by two bottom fold lines (10b), able to be arranged in the assembled blank (7) in an at least essentially coplanar manner and side by side transversely, in such a way that the objects (1) can rest on their first surfaces (7a),
- Two similar outside edge panels (11), arranged laterally, each delimited transversely by a bottom fold line (10b) and a top supporting edge (12), each connected to a receiving panel (9) by a bottom fold line (10b), that can be arranged, in the assembled blank (7), in an at least essentially parallel manner between them and orthogonal to the receiving panels (9),
- At least one pair of two similar internal spacer panels (13), arranged in the median, each delimited transversely by a bottom fold line (10a) and a top supporting fold line (14), connected to one another by said top supporting fold line (14) and connected to two receiving panels (9) by two bottom fold lines (10a), that can be arranged, in the assembled blank (7), against one another by their second surfaces (7b) and in a manner that is at least essentially parallel to the edge panels (11), with the edge panels (11) and the spacer panels (13) having the same orientation relative to the receiving panels (9) and, between their bottom fold line (10b, 10a) and either their top supporting edge (12) or their top supporting fold line (14), a similar transverse width,
**characterized by** the fact that:
- At least one of the edge panels (11) and at least one of the spacer panels (13) comprises, over its top supporting edge (12), its top supporting fold line (14), at least one projecting part (16a, 16b) extending essentially in the plane of said edge panel (11), and of said spacer panel (13), in the essentially orthogonal direction and in the direction opposite to the bottom fold line (10b, 10a) of said edge panel (11), and of said spacer panel (13),
- At least one of the receiving panels (9) comprises, adjacent to its bottom fold line (10b, 10a) with an edge panel (11), and with a spacer panel (13), at least one through part (17a, 17b) for an insertion essentially into the plane of said edge panel (11), and of said spacer panel (13), and in the direction that is essentially orthogonal to said receiving panel (9),
- The projecting part (16a, 16b) and the through part (17a, 17b), respectively, are of sizes and are positioned in a relative manner on the top supporting edge (12), the top supporting fold line (14), and the bottom line (10a, 10b), in such a way as to be able, with said blank (7) being assembled, to engage respectively with a through part (17a, 17b) of another similar assembled blank (7) arranged vertically above and with a projecting part (16a, 16b) of another similar assembled blank (7) arranged vertically below.

2. Flat blank (7) according to claim 1, **characterized by** the fact that the frontal jacket of a projecting part (16a, 16b) is lower than the frontal contour of a through part (17a, 17b) in such a way as to ensure their engagement, in particular said jacket and said contour are adjusted to ensure their engagement without substantial play.

3. Flat blank (7) according to claim 1 or 2, wherein a through part (17a, 17b) extends in part over a receiving panel (9) and in part over the edge panel (11) or over the spacer panel (13) that is adjacent to said receiving panel (9), astride the bottom fold line (10b, 10a) between the receiving panel (9) and said edge panel (11) or said spacer panel (13).

4. Flat blank (7) according to any of claims 1 to 3, wherein the two edge panels (11) and/or the two spacer panels (13) comprise at least one projecting part (16a, 16b) and at least one through part (17a, 17b).

5. Flat blank (7) according to any of claims 1 to 4, wherein a projecting part (16a, 16b) or a through part (17a, 17b) is in multiple similar sections (16aa, 16ab, 16ba, 16bb, 17aa, 17ab, 17ba, 17bb), coplanar, spaced along the longitudinal direction (L), in particular is in two sections; and in particular wherein the projecting part(s) (16a, 16b) and the through part(s) (17a, 17b) of the blank (7) all have the same number of sections.

6. Flat blank (7) according to any of claims 1 to 5, wherein a projecting part (16a, 16b) extends from the top supporting edge (12) or the top supporting fold line (14) where it is located and in the direction that is essentially orthogonal and in the direction opposite to the bottom fold line (10b, 10a) of the edge panel (11) or the spacer panel (13) that comprises it, over a length that is a small fraction of the transverse width of the edge panels (11) and spacer panels (13), in particular a fraction of between 5% and 30%, more especially between 10% and 20%;
and/or wherein a projecting part (16a, 16b) and/or a through part (17a, 17b), in one or more sections, extends in total along the top supporting edge (12), the top supporting fold line (14), and the bottom fold line (10b, 10a) where it is located, over a length that is a fraction of the length of said top supporting edge (12), said top supporting fold line (14), and said bottom fold line (10b, 10a), in particular a fraction of between 15% and 35%, and more especially between 18% and 28%.

7. Flat blank (7) according to any of claims 1 to 6, wherein the projecting part (16b) of the first spacer panel (13) of a pair of spacer panels (13) is delimited and formed by a scalloping of the second spacer panel (13) of the pair of spacer panels (13), with the top supporting fold line (14) between the first spacer panel (13) and the second spacer panel (13) being interrupted in said projecting part (16b).

8. Flat blank (7) according to any of claims 1 to 7, wherein on their two edges (15) arranged essentially parallel to the transverse direction (T), the receiving panels (9) are lacking edge panels.

9. Flat blank (7) according to any of claims 1 to 8, wherein at least one-and in particular all-of the receiving panels (9) comprise(s) one or more cut-out segments (18) delimiting one or more flaps (18a), able, with the blank (7) being assembled, to be set up relative to the receiving panels (9) in the same direction as the edge panels (11) and the spacer panels (13) for the purpose of wedging the objects (1).

10. Flat blank (7) according to any of claims 1 to 9, wherein at least one-and in particular the two-edge panel(s) (11) comprise(s) at least one opening (19) that is capable of-with the blank (7) being assembled-aeration and/or gripping.

11. Flat blank (7) according to any of claims 1 to 10, wherein at least one-and in particular the two-spacer panel(s) (13) of at least one pair of spacer panels (13) comprise(s) at least one opening (20) that is capable of-with the blank (7) being assembled-aeration.

12. Assembled blank (7), especially capable of being part of a package (4), being combined and made integral with a cap (8), created by the expanding of a flat blank (7) according to any of claims 1 to 11, in which:
- The two receiving panels (9) of the at least one pair of receiving panels (9) are arranged in an at least essentially coplanar manner and side by side transversely, in particular are arranged at least essentially horizontally, in such a way that the objects (1) can rest on their first surfaces (7a),
- The two edge panels (11) are arranged in an at least essentially orthogonal manner to the receiving panels (9), in particular are arranged at least essentially vertically,
- The two spacer panels (13) of the at least one pair of spacer panels (13) are arranged against one another by their second surfaces (7b) and in a manner that is at least essentially orthogonal to the receiving panels (9) and in the same direction as the two edge panels (11), in particular are arranged at least essentially vertically,
- The projecting part (16a, 16b) extends essentially in the plane of the edge panel (11), and of the spacer panel (13), comprising it, in the essentially orthogonal direction and in the direction opposite to the bottom fold line (10b, 10a) of said edge panel (11), and of said spacer panel (13), in particular is located in the upper part of the assembled blank (7) and is directed upward, with the through part (17a, 17b) being located in the lower part of the assembled blank (7).

13. Package (4) for at least one layer (5) of at least two objects (1) comprising in combination an assembled blank (7) according to claim 12 and a cap (8), rigidly made integral with one another head to foot and in which:
The receiving panels (9) form an inside and lower support surface for receiving objects (1),
the edge panels (11) form a lateral edge of the objects (1) toward the outside, and the spacer panels (13) form a lateral edge of the objects (1) toward the inside,
The cap (8) comprises an upper cover part (21), located vertically above the at least one pair of receiving panels (9) and said cover part (21) engages with, in particular rests on, the top supporting edges (12) and the top supporting fold line(s) (14) of the edge panels (11) and the spacer panels (13),
The receiving panels (9) and the cap (8) delimit between them an object (1) package space (22), and said object (1) package space (22) comprises at least two compartments (22a, 22b) that are transversely side by side, separated from one another by at least one pair of spacer panels (13) arranged against one another, with the at least two compartments (22a, 22b) being capable of receiving the at least two objects (1),
The cap (8) comprises an engagement part (23) made integral with the assembled blank (7), in particular made integral with the edge panels (11),
The cap (8) houses one or more cap passages (24) for the passage of the projecting part(s) (16a, 16b) of the assembled blank (7), which projecting part(s) (16a, 16b) of the assembled blank (7) project above the cover part (21) of the cap (8).

14. Package (4) according to claim 13, wherein the cap (8) is formed by an assembled blank, of the cardboard type or the like, with a cover panel (21) and two similar lateral engagement folds (23), located on both sides of the cover panel (21) and connected to the latter by two cap fold lines (25), with the two folds (23) coming against and being made integral with two edge panels (11) of the assembled blank (7), the cover panel (21) comprising at least one cap passage (24) in the form of a through part of the localized cap (8) adjacent to the cap fold line (25) of the cover panel (21) with at least one fold (23) and/or localized facing a pair of spacer panels (13) of the assembled blank (7), with the cap through part (24) and a projecting part (16a, 16b) of the assembled blank (7) being respectively of sizes and being positioned in a relative manner such that a projecting part (16a, 16b) of the assembled blank (7) passes through a cap through part (24) and projects from the outside surface of the cover panel (21) of the cap (8).

15. Package (4) according to claim 14, wherein the cover panel (21) of the cap (8) comprises at least one cap through part (24) adjacent to said cap fold line (25), in particular to two cap fold lines (25), and at least one cap through part (24) facing a pair of spacer panels (13), in particular each pair of spacer panels (13).

16. Package (4) according to claim 14 or 15, wherein a cap through part (25) extends in part over the cover panel (21) of the cap (8) and in part over a fold (23) of the cap (8), astride their corresponding cap fold line (25).

17. Package (4) according to any of claims 14 to 16, wherein the cover panel (21) of the cap (8) comprises one or more cut-out segments delimiting one or more parts that can be set up above the cover panel (21) for the purpose of forming a gripping means.

18. Package (4) according to any of claims 14 to 17, wherein the assembled blank (7) and the cap (8) are made integral by gluing, welding, stapling, or the like.

19. Bundle (3) comprising a package (4) according to any of claims 14 to 18 and at least one layer (5) of at least two objects (1), with the lower layer (5) of objects (1) resting by its lower surface on an inside and lower support surface formed by the inside and upper surface of the receiving panels (9), with the edge panels (11) forming a lateral edge of objects (1) toward the outside, and the spacer panels (13) forming a lateral edge of the objects (1) toward the inside, with the at least two objects (1) being located in the at least two compartments (22a, 22b) side by side transversely from the object (1) package space (22), separated by a pair of spacer panels (13) arranged one against the other between objects (1), with the space requirement of the at least one layer (5) of objects (1) in the direction orthogonal to the receiving panels (9) and to the cover part (21) of the cap (8), between the lowermost surface and the uppermost surface, being similar to or at most equal to the spacing between the inside and upper surface of the receiving panels (9) and the inside and lower surface of the cover part (21), in such a way that the inside and lower surface of the cover part (21) comes against or is in the vicinity of the upper surface of the upper layer (5) of objects (1), with the projecting part(s) (16a, 16b) of the assembled blank (7) projecting above the cover part (21) of the cap (8).

20. Bundle (3) according to claim 19, wherein it comprises either one or multiple layers (5) of objects (1), with these layers (5) then being superposed, in particular directly superposed.

21. Bundle (3) according to claim 19 or 20, wherein an object (1) is a primary package filled with contents, comprising one or more cartons (1a) arranged in multiple longitudinal and/or transverse rows, a carton (1a) having a side wall (2a) in the general shape of a cylinder or prism, a bottom wall (2b) and a top wall (2c), in particular a lid, with several cartons (1a) being connected to one another, in particular toward their top walls (2c);
in particular wherein an object (1) comprises a peripheral collar, in particular a collar (2d) for connection of several cartons (1a), with the edge (2e) of the collar (2d) coming against the edge panel (11) and/or the spacer panel (13).

22. Palletized load (29) of objects (1) comprising a pallet (29a) on which rest a number of bundles (3) according to any of claims 19 to 21, arranged beside one another and stacked on one another vertically, with the outside and lower surface of the receiving panels (9) of an upper bundle (3) resting on the outside and upper surface of a cover part (21) of a lower bundle (3), the projecting parts (16a, 16b) directed toward the top of a lower bundle (3) engaging with the through parts (17a, 17b) of an upper bundle (3), without the necessity for additional package means of each bundle (3) or of multiple bundles (3) placed side by side.

23. Process for the production of a bundle according to any of claims 19 to 21, in which:
- At least two objects (1) are available,
- A flat blank (7) according to any of claims 1 to 11 is available,
- A cap (8) is available,
- The blank (7) is shaped,
- The objects (1) are arranged in such a way as to form at least one layer (5) of at least two objects (1), with the lower layer (5) of objects (1) resting on the inside and upper surface of the receiving panels (9), and any other layer (5) of objects (1) being superposed on the lower layer (5),
- The cap (8) is placed on the assembled blank (7) head to foot, with the cover part (21) being placed vertically above receiving panels (9), the inside and lower surface of the cover part (21) coming against or in the vicinity of the upper surface of the upper layer (5) of objects (1), with the cover part (21) engaging with the top supporting edges and the top supporting fold line(s) of the edge panels (11) and the spacer panels (13), with the projecting part(s) (16a, 16b) of the assembled blank (7) projecting above the cover part (21) of the cap (8),
- The cap (8) is made integral with the assembled blank (7).

24. Process for the production of a palletized load (29) according to claim 22, wherein:
- A pallet (29a) is available,
- Bundles (3) are available,
- And the bundles (3) are placed on the pallet (29a), beside one another, and stacked on one another vertically, without the necessity for additional package means of each bundle (3) or of multiple bundles (3) arranged side by side.

25. Installation for implementing the process for the production of a bundle according to claim 23, which comprises:
- Means for supplying at least two objects (1), flat blanks (7) according to any of claims 1 to 11, and caps (8),
- Means for shaping blanks (7),
- Means for arranging the objects (1) on the blanks (7),
- Means for arranging a cap (8) on the assembled blank (7) head to foot,
- Means for making the cap (8) integral with the assembled blank (7).
